# EUROPÄISCHE PATENTSCHRIFT

(11) **EP 1 736 374 B1**
(45) Veröffentlichungstag und Bekanntmachung des Hinweises auf die Patenterteilung: **05.01.2011**
(21) Anmeldenummer: 06012905.3
(22) Anmeldetag: 22.06.2006
(51) Int. Cl.: B60R 21/13

(54) **Überrollschutzsystem für ein Kraftfahrzeug**
Roll over protection system for a motor vehicle
Système d'arceau de sécurité pour un véhicule à moteur

(30) Priorität: 22.06.2005 DE 102005028964
(43) Veröffentlichungstag der Anmeldung: 27.12.2006
(73) Patentinhaber: Wilhelm Karmann GmbH, 49084 Osnabrück (DE)
(72) Erfinder: Kasubke, Wolfgang, 49124 Georgsmarienhütte (DE)
(74) Vertreter: Kronthaler, Schmidt & Coll.

(56) Entgegenhaltungen:
- DE-A1-102004 016 362
- DE-C1- 4 437 925
- DE-U1- 9 421 370
- US-B1- 6 511 095

## Beschreibung

Die Erfindung betrifft ein Überrollschutzsystem für ein Kraftfahrzeug, insbesondere für ein Cabriolet-Fahrzeug, nach der im Oberbegriff des Patentanspruches 1 oder 2 näher definierten Art.

Bei Personenkraftwagen oder auch bei Traktoren ist es bekannt, zur Schaffung eines Überlebensraumes für Insassen im Falle eines Fahrzeugüberschlags Überrollschutzsysteme bereitzustellen, welche einen Überrollkörper, wie z. B. einen Überrollbügel aufweisen, welcher einem einzelnen Fahrzeugsitz oder mehreren Fahrzeugsitzen zugeordnet ist und der in seiner Ruhelage in einer fahrzeugfesten Kassette verborgen ist, aus der er bei Erkennen einer Verunfallung des Fahrzeugs schlagartig in eine obere Stützlage verlagerbar und in dieser Stützlage verriegelbar ist.

In der Praxis allgemein verwendete Überrollbügel bestehen typischerweise aus einem U-förmigen Bügel, dessen rohrförmige Schenkel in Standrohren eines fahrzeugfesten Moduls vertikal geführt sind. Im Inneren jedes Schenkels ist eine Spiralfeder angeordnet, welche durch eine Haltevorrichtung unter Vorspannung gehalten wird, die in Abhängigkeit eines Crash-Signals der Fahrzeugsensorik lösbar ist, wodurch der Überrollbügel unter der Wirkung der Feder in Zehntelsekunden ausgefahren und in seiner Stützlage durch eine geeignete Verriegelungsvorrichtung arretiert wird. Die beiden rohrförmigen Schenkel sind dabei durch ein Querjoch miteinander verbunden, über das meist ein gepolstertes Prallelement geschoben ist.

In der DE 195 40 819 C2 und der DE 197 12 955 A1 sind Beispiele für einen sich über die gesamte Fahrzeugbreite erstreckenden, im Crash-Fall ausfahr- oder ausschwenkbaren Überrollbügel beschrieben.

Als Beispiel für eine nur einem Fahrzeugsitz zugeordnete Überrollschutz-Vorrichtung mit einem Überrollkörper, welcher unabhängig von einem einem anderen Fahrzeugsitz zugeordneten Überrollkörper ausfahrbar ist, wird exemplarisch auf die DE 198 38 989 C1 verwiesen. Darin ist eine einem jeden Fahrzeugsitz zugeordnete Überrollschutz-Vorrichtung offenbart, bestehend aus einer fahrzeugfest angeordneten Kassette, einem in der Kassette ausfahrbar in Führungen gehaltenen und geführtem Überrollkörper in Form eines sich über die gesamte Kassettenbreite erstreckenden Profilbügelkörpers, einer Verriegelungsvorrichtung zur Selbstverriegelung der Ausfahrbewegung und einem Federantriebssystem zum Ausfahren des Profil-Bügelkörpers und mit einer mechanischen Haltevorrichtung zum Halten des Überrollkörpers in einem Ruhezustand und gegen der Vorspannkraft einer Druckfeder des Federantriebssystems.

Ein weiteres Beispiel für eine nur einem Fahrzeugsitz zugeordnete Überrollschutz-Vorrichtung ist in der DE 10 2004 016 362 A1 offenbart. Bei der darin beschriebenen Baueinheit für ein Cabriolet sind die Führungen für die Schenkel eines Überrollbügels innerhalb eines sich über die Innenseite der Karosserie des Cabriolets erstreckenden Querträgers angeordnet. Der der Verlagerung des jeweiligen Überrollbügels in seine Gebrauchsstellung dienende Energiespeicher, welcher in der Regel in Form von Schraubenfedern ausgebildet ist, stützt sich an einer Konsole ab, die mit dem Querträger über vertikal verlaufende Halterungen verbunden ist.

Bei allen vorgenannten Überrollschutzsystemen ist das Antriebssystem für den Überrollkörper nur mit einer Druckfeder ausgebildet, welche zwischen einem Fahrzeugboden und dem Überrollkörper der betreffenden Überrollschutz-Vorrichtung angeordnet und im Ruhezustand der Überrollschutz-Vorrichtung komprimiert ist. Hierdurch ergeben sich häufig Bauraumschwierigkeiten hinsichtlich der Breite des fahrzeugfesten Moduls oder bei einem relativ langen Ausfahrhub des Überrollkörpers.

Eine große Baubreite ist insbesondere bei der Schaffung einer Durchlademöglichkeit zwischen einem heckseitigen Ablageraum und einem Fahrgastraum hinderlich, da nur ein begrenzter Raum für eine Durchladeöffnung zur Verfügung steht.

Aus der DE 44 37 925 C1 ist eine Antriebsvorrichtung für einen Überrollkörper von Kraftwagen bekannt, bei dem ein insgesamt U-förmig gestalteter Überrollbügel im Crash-Fall aus einer etwa horizontalen Ruheposition um eine karosseriefest gehaltene Achse ca. 50° nach vorn in eine Stützposition hochklappbar ist. Eine die Verstellung des Überrollkörpers bewirkende Antriebsvorrichtung ist dabei mit einem Hebelmechanismus und einem Führungsgehäuse mit Kulissenführungen ausgebildet, wobei eine Schraubenzugfeder im Ruhezustand unter Vorspannung an das Führungsgehäuse angebunden ist und nach Freigabe einer Verriegelung im Crash-Fall den Hebelmechanismus zum Hochklappen des Überrollbügels antreibt.

Bei dieser bekannten Antriebsvorrichtung wird somit die Federkraft über einen aufwändigen Hebelmechanismus in eine Schwenkbewegung des Überrollkörpers umgesetzt.

Es ist Aufgabe der vorliegenden Erfindung, ein Überrollschutzsystem für ein Kraftfahrzeug, insbesondere ein Cabriolet-Fahrzeug, zu schaffen, welches im Hinblick auf eine möglichst kompakte Bauweise verbessert ist.

Diese Aufgabe wird mit einem Überrollschutzsystem gemäß den Merkmalen des Patentanspruches 1 gelöst.

Es ist somit ein Überrollschutzsystem vorgesehen, welches aus wenigstens einer Überrollschutzvorrichtung für wenigstens einen Fahrzeugsitz besteht. Die Überrollschutzvorrichtung ist jeweils mit einem karosseriefest angeordneten ersten Modul mit Führungseinrichtungen für ein hierin zwischen einer abgesenkten Ruhelage und einer erhöhten Stützlage verfahrbares zweites Modul mit einem Überrollkörper ausgebildet und weist eine lösbare Halteeinrichtung zum Halten des zweiten Moduls in seiner Ruhelage auf. Des Weiteren ist eine Verriegelungsvorrichtung vorgesehen, mittels der das zweite Modul in einer von seiner Ruhelage abweichenden Position gegen einen in Richtung der Ruhelage wirkenden Kraftangriff selbsttätig abstützbar ist. Weiterhin ist für eine solche Überrollschutzvorrichtung ein Antriebssystem mit einer Zugfedervorrichtung vorgesehen, mittels der das zweite Modul in seiner Ruheposition vorgespannt und im Bedarfsfall in Richtung seiner Stützlage verlagerbar ist.

Die Erfindung sieht vor, dass die Zugfedervorrichtung mit ihrem oberen Ende mit einer fahrzeugfesten Federaufhängung verbunden oder an einem oberen Ende einer fahrzeugfest abgestützten Druckfeder gelagert ist und mit ihrem unteren Ende direkt mit dem Überrollkörper des ausfahrbaren zweiten Moduls wirkverbunden ist sowie in Ausfahrrichtung des Überrollkörpers angeordnet ist.

Die Ausgestaltung des Antriebssystems mit einer Zugfedervorrichtung, welche mit ihrem oberen Ende mit einer fahrzeugfesten Federaufhängung verbunden ist oder an einem oberen Ende einer fahrzeugfest abgestützten Druckfeder gelagert ist und welche mit ihrem anderen, unteren Ende direkt mit dem Überrollkörper des ausfahrbaren zweiten Moduls wirkverbunden ist sowie in Ausfahrrichtung des Überrollkörpers angeordnet ist, hat den Vorteil, dass das fahrzeugfeste Modul der jeweiligen Überrollschutz-Vorrichtung sehr kompakt und leicht ausgeführt werden kann, wobei auch eine separate Federführung entfallen kann.

Wenn das Antriebssystem rein als Zugfedervorrichtung ausgebildet ist, kann damit eine sehr schmale Bauweise erreicht werden, welche insbesondere dann vorteilhaft ist, wenn zwischen einem heckseitigen Aufnahmeraum und einem Fahrgastraum eine Durchladeöffnung vorgesehen ist, welche bei einer Ausgestaltung des Überrollschutzsystems gemäß der ersten Alternative des Patentanspruches 1 entsprechend groß dimensioniert werden kann.

Die Ausgestaltung des Antriebssystems als eine auf einer Druckfeder abgestützte Zugfedervorrichtung gemäß der zweiten Alternative des Anspruchs 1 ist insbesondere bei eingeschränktem Bauraum in der Höhe zur Unterbringung eines Federantriebes und einem langen erforderlichen Förderweg zur Überführung des Überrollkörpers in seine Stützposition vorteilhaft.

Die Zugfedervorrichtung in einfachster Ausführung als einzelne Zugfeder ausgebildet sein, jedoch kann die Zugfedervorrichtung je nach geforderter Federkraft und verwendeter Federn auch wenigstens zwei Zugfedern aufweisen.

Bei Ausbildung der Zugfedervorrichtung mit mehreren Zugfedern können diese in einer vorteilhaften Anordnung gestaffelt wirkend angeordnet sein. Eine Staffelung von Zugfedern, welche z. B. in ihrer Federhärte gegeneinander abgestuft sein können, ist bei eingeschränkter Bauraumhöhe zur Unterbringung eines Zugfederantriebes und bei einem erforderlichen langen Förderweg des Überrollkörpers sowie einer gewünschten Restfederspannung in der höchsten Ausfahrposition des Überrollkörpers vorteilhaft.

Die Zugfedern können dabei zweckmäßig ineinander angeordnet sein, wobei eine innere Zugfeder eine höhere Federsteife als eine äußere Zugfeder aufweisen kann.

Eine vorteilhafte Anordnung zweier Zugfedern kann zudem vorsehen, dass die Zugfedern um den Überrollkörper axial versetzt zueinander angeordnet sind, wobei z. B. ein die Federanbindung an den Überrollkörper bildender Mitnehmer einer zweiten bei einer Ausfahrbewegung des Überrollkörpers in Wirkeingriff mit diesem gelangenden Zugfeder in Ruheposition von dem Überrollkörper weg ausgelenkt angeordnet ist und vorzugsweise an einer dem Überrollkörper zugewandten Seite mit wenigstens einer Rolle ausgebildet ist, an der der Überrollkörper bis zum Wirkeingriff der zweiten Zugfeder abrollbar ist.

In einfacher Ausgestaltung der Erfindung kann der Überrollkörper zur Führung der wenigstens einen Zugfeder der Zugfedervorrichtung dienen, indem die Zugfedervorrichtung im Ruhezustand der Überrollschutz-Vorrichtung wenigstens teilweise in einem axialen Aufnahmekanal des Überrollkörpers auf Zug vorgespannt angeordnet ist.

Bei einer vorteilhaften Ausgestaltung eines Überrollschutzsystems nach der Erfindung kann die Federaufhängung an einer sich vertikal von einem Fahrzeugboden weg erstreckenden Federführungsstange ausgebildet sein, wobei sich die Zugfeder in Richtung eines Fahrzeugbodens um eine Federführungsstange bis zu einem mit dem Überrollkörper wirkverbundenen Federteller erstreckt.

Alternativ kann die Federaufhängung an wenigstens einer sich vertikal von einem Fahrzeugboden weg in das Innere des Überrollkörpers erstreckenden Strebe angeordnet sein, wobei sich die Zugfeder frei in Richtung des Fahrzeugbodens bis zu einer mit dem Überrollkörper wirkverbundenen Federanbindung erstreckt und im Ruhezustand auf Zug vorgespannt durch die lösbare Halteeinrichtung gehalten ist, so dass der Überrollkörper nach einer Freigabe durch die lösbare Halteeinrichtung aufgrund der Zugkraft der Feder in seine obere Stützlage geführt wird.

Bei einer weiteren vorteilhaften Ausführung kann die Federaufhängung an einem sich im Wesentlichen horizontal in den Überrollkörper erstreckenden, z. B. bolzenartigen Halteelement angeordnet sein, wobei sich die Zugfeder in dem Überrollkörper in Richtung des Fahrzeugbodens bis zu einer mit dem Überrollkörper wirkverbundenen Federanbindung erstreckt und der Überrollkörper zur Längsverschiebbarkeit entlang dem Halteelement einen sich in Axialrichtung erstreckenden Durchtrittsschlitz aufweist.

Die Zugfeder kann bei einer derartigen Ausführung des Überrollschutzsystems ohne weitere Führung vollständig durch den Überrollkörper geführt sein.

Zur Erzielung einer gewichtsparenden, einfachen und auf die notwendigsten Elemente begrenzte Kompaktbauweise kann es weiterhin vorgesehen sein, dass die Überrollschutz-Vorrichtung im Bereich einer eine vordere Wandung und eine hintere Wandung aufweisenden Fahrzeugquerwand angeordnet ist und mit einem kassettenartigen ersten Modul ausgeführt ist, wobei die vordere Wandung und/oder die hintere Wandung der Fahrzeugquerwand jeweils eine Wandung des ersten Moduls bilden. Dabei werden auch die im Falle eines Fahrzeugüberschlags auf das Überrollschutzsystem und somit die Fahrzeugquerwand wirkenden Kräfte optimal in die tragende Fahrzeugstruktur eingeleitet.

Die lösbare Halteeinrichtung zum Halten des zweiten Moduls mit dem Überrollkörper in seiner Ruheposition kann bei einer vorteilhaften Ausführung ein um eine feste Drehachse schwenkbar gelagertes Verriegelungselement umfassen, welches einen Klinkenabschnitt zur Wirkverbindung mit einem an dem Überrollkörper angeordneten Verriegelungselement-Gegenkörper in Ruheposition des Überrollkörpers aufweist, wobei das Verriegelungselement in Ruheposition durch ein Sperrglied eines Aktuators gegen eine die Halteeinrichtung lösende Rotation gesichert ist.

Eine solche Ausgestaltung der lösbaren Halteeinrichtung ermöglicht eine sichere und kostengünstige Verriegelung des Überrollkörpers in seiner Ruheposition, wobei die Halteeinrichtung mit wenigen ohne großen Präzisionsaufwand zu fertigenden Bauteilen realisiert werden kann.

In einfacher Ausgestaltung kann es vorgesehen sein, dass das Sperrglied durch den Aktuator in Axialrichtung linear bewegbar ist, womit eine Ausgestaltung des Aktuators z. B. als elektromagnetischer oder piezoelektrischer Aktuator, welcher das Sperrglied in dessen Axialrichtung zur Auslösung des Überrollkörpers zurückzieht, möglich ist. Das Sperrglied kann dabei ein mittels einer Feder entgegen dem Verriegelungselement vorgespannter Stift oder ein Blechelement einfacher Bauart sein.

Eine weitere vorteilhafte Ausführung der Erfindung kann auch vorsehen, dass das schwenkbare Verriegelungselement, welches mit einem Verriegelungselement-Gegenkörper des zweiten Moduls in Ruheposition des Überrollkörpers in Eingriff steht und im Crash-Fall den Überrollkörper zur Überführung in dessen Stützposition freigibt, in Ruheposition durch einen im Crash-Fall aufschmelzbaren Schmelzeinsatz des Aktuators gehalten ist. Die Anordnung des Schmelzeinsatzes kann dabei wie in der deutschen Patentanmeldung DE 10 2005 028 960 näher beschrieben ausgeführt sein.

Die Verwendung eines Schmelzeinsatzes gewährleistet auf einfache und kostengünstige Art eine zuverlässige und schnelle Auslösung des Überrollkörpers. Der Schmelzeinsatz kann dabei eine beliebige Form haben und z. B. plattenförmig oder stab- bzw. drahtförmig ausgebildet sein.

In weiterer vorteilhafter Ausgestaltung der Erfindung kann das Verriegelungselement im Crash-Fall auch durch einen Aktuator mit einem pyrotechnischen Treibsatz in eine Freigabeposition überführbar ist.

Die Verriegelungsvorrichtung einer Überrollschutz-Vorrichtung kann wenigstens eine erste Rasteinrichtung aufweisen, die zum Abstützen des zweiten Moduls mit einer zweiten Rasteinrichtung in Wirkverbindung bringbar ist und die eine Bewegung des zweiten Moduls ausgehend von seiner Ruhelage in Richtung seiner Stützlage zulässt. Vorzugsweise weist die erste Rasteinrichtung eine an dem ersten Modul oder dem zweiten Modul drehbar gelagerte Sperrklinke mit wenigstens einer Rastklaue auf, die mit einem Rastelement der an dem jeweils anderen Modul angeordneten zweiten Rasteinrichtung zusammenwirkt.

Die zweite Rasteinrichtung kann mit einem aus einem Strangpressprofil hergestellten und wenigstens annähernd leistenförmig ausgeführten Rastelement mit mehreren in Bewegungsrichtung des zweiten Moduls hintereinander angeordneten wabenartigen Aussparungen ausgebildet sein, in welche die Sperrklinke in Abhängigkeit einer Ausfahrstellung in Richtung ihrer Wirkposition mit ihrer Rastklaue jeweils eingreift.

Das Rastelement kann dabei aus einem Strangpressprofil mit kanalartigen, mittels entsprechend geformter Kerne festgelegten Aussparungen derart hergestellt sein, dass ein scheibenartiger Bereich mit vordefinierter Breite unter einem in Bezug auf eine Längsachse der Aussparungen vordefinierten Ablängungswinkel, d. h. schräg, vom Strangpressprofil vorzugsweise mittels Sägen abgetrennt wird. Ein derart hergestelltes Rastelement ist im Vergleich zu mit einem Zahnprofil ausgeführten Rastleisten einfacher und kostengünstiger herzustellen.

Zudem ist das vorgeschlagene Überrollschutzsystem im Bereich der Verriegelungsvorrichtung an verschiedene jeweils vorliegende Lastfälle auf einfache Art und Weise durch Veränderung der Dimensionierung der einzelnen Bauteile der Verriegelungsvorrichtung anpassbar. So besteht die Möglichkeit, das leistenförmige Rastelement der zweiten Rasteinrichtung mit mehreren nebeneinander angeordneten Aussparungsreihen auszuführen, in welche mehrere nebeneinander und untereinander angeordnete Rastklauen der Sperrklinke in Wirkposition der Verriegelungseinrichtung gleichzeitig in mehrere Aussparungen des Rastelementes eingreifen, wodurch bei einer Verunfallung des Fahrzeugs höhere auf das Überrollschutzsystem einwirkende Kräfte abstützbar sind.

Das Überrollschutzsystem gemäß der Erfindung weist vorzugsweise für jeden Fahrzeugsitz eine Überrollschutz-Vorrichtung auf, welche unabhängig von der Überrollschutz-Vorrichtung eines anderen Sitzes angetrieben wird, so dass eine Verkantung des ausfahrbaren Moduls bei dessen Ausfahrbewegung und somit eine Beeinträchtigung der Funktionssicherheit oder gegebenenfalls zusätzliche erforderliche Synchronisationseinrichtungen vermieden werden können.

Im Rahmen der vorliegenden Erfindung kann eine mit dem Überrollschutzsystem eine Bauteilgruppe bildende Fahrzeugquerwand sowohl eine an der Rohkarosserie des Fahrzeugs ausgebildete Wand als auch eine außerhalb des Fahrzeugs mit dem Überrollschutzsystem vorkonfektionierte Baueinheit sein, die an dem Fahrzeugaufbau festlegbar ist. Die Befestigung dieser Baueinheit an dem Fahrzeugaufbau kann beispielsweise mittels Verschraubung an Aufnahmen an der Fahrzeugseite erfolgen.

Bei einer Weiterführung der Erfindung kann in die Fahrzeugquerwand bzw. in das Überrollschutzsystem auch ein Rückhaltegurtsystem mit Sicherheitsgurtführungen für wenigstens einen Sicherheitsgurt integriert sein. Die Komponenten eines Sicherheitsgurtsystems, wie z. B. ein Gurtaufroller und eine obere Sicherheitsgurtführung, können über entsprechende Aufnahmen problemlos in die Fahrzeugquerwand und in die Bauteile des Überrollschutzsystems integriert werden. Das Rückhaltegurtsystem kann dabei nicht nur Sicherheitsgurte zum Angurten von erwachsenen Personen umfassen, sondern auch Kindersitzhaltegurte, wobei bei einer vorteilhaften Ausführung auch ein oberer Verankerungspunkt für einen Kindersitzhaltegurt, welcher auch als Toptether-Befestigung bezeichnet wird, an einem fahrzeugfesten Bauteil des Überrollschutzsystems bzw. der Fahrzeugquerwand angeordnet ist.

Des Weiteren kann die Baueinheit aus Fahrzeugquerwand und Überrollschutzsystem zusätzlich auch Sitzkomponenten, wie z. B. ein oberes und unteres Sitzlehnenlager, umfassen.

Weitere Vorteile und vorteilhafte Ausgestaltungen eines Überrollschutzsystems gemäß der Erfindung sind der Beschreibung, der Zeichnung und den Patentansprüchen entnehmbar.

Mehrere Ausführungsbeispiele eines erfindungsgemäß ausgestalteten Überrollschutzsystems für ein Cabriolet-Fahrzeug sind in der Zeichnung schematisch vereinfacht dargestellt und werden in der nachfolgenden Beschreibung näher erläutert.

Es zeigt:
- Fig. 1: eine schematisierte Vorderansicht eines Ausschnitts einer Fahrzeugquerwand eines Cabriolet-Fahrzeugs mit einer aktivierten Überrollschutz-Vorrichtung eines erfindungsgemäß ausgestalteten Überrollschutzsys- tems;
- Fig. 2: eine teilweise geschnittene perspektivische Ansicht der Überrollschutz-Vorrichtung der Fig. 1 in Allein- stellung;
- Fig. 3: eine ausschnittsweise dreidimensionale Ansicht eines Bereiches der Überrollschutz-Vorrichtung der Fig. 1 und Fig. 2;
- Fig. 4: eine Rückansicht des in Fig. 3 gezeigten Bereiches der Überrollschutz-Vorrichtung;
- Fig. 5: ein weiteres Ausführungsbeispiel eines Überroll- schutzsystems in Alleinstellung, wobei in der rech- ten Figurenhälfte eine Überrollschutz-Vorrichtung des Überrollschutzsystems in einer Ruhelage und in der linken Figurenhälfte eine Überrollschutz- Vorrichtung des Überrollschutzsystems in einer aus- gefahrenen Stützlage dargestellt ist;
- Fig. 6: eine vereinfachte perspektivische Darstellung eines Bereichs der ausgefahrenen Überrollschutz- Vorrichtung der Fig. 5;
- Fig. 7: eine Explosionsdarstellung einzelner Komponenten des in Fig. 6 gezeigten Bereichs der Überrollschutz- Vorrichtung;
- Fig. 8: ein weiteres Ausführungsbeispiel eines erfindungsge- mäß ausgestalteten Überrollschutzsystems in Allein- stellung, wobei in der rechten Figurenhälfte eine Überrollschutz-Vorrichtung des Überrollschutzsystems in einer Ruhelage und in der linken Figurenhälfte eine Überrollschutz-Vorrichtung des Überrollschutz- systems in einer ausgefahrenen Stützlage dargestellt ist;
- Fig. 9: eine Vorderansicht einer Haltevorrichtung für einen Überrollkörper der Überrollschutz-Vorrichtung der Fig. 1 bis Fig. 8 in einem verriegelten Ruhezustand;
- Fig. 10: eine dreidimensionale Darstellung der Halteeinrich- tung der Fig. 9 in Ruheposition des Überrollkörpers;
- Fig. 11: eine teilweise geschnittene Seitenansicht der Halte- einrichtung gemäß Fig. 9 und Fig. 10 nach einer Aus- lösung und Verlagerung des Überrollkörpers in dessen ausgefahrene Stützposition;
- Fig. 12: einen schematisierten Längsschnitt durch eine alter- nativ hinsichtlich des Antriebssystems ausgebildete Überrollschutz-Vorrichtung, wobei sich die Überroll- schutz-Vorrichtung in einer Ruhe- bzw. Bereit- schaftslage befindet;
- Fig. 13: die Überrollschutz-Vorrichtung der Fig. 12 nach Ü- berführung des Überrollkörpers in seine ausgefahrene Stützlage;
- Fig. 14: eine vergrößerte Darstellung eines mit "I" bezeich- neten Bereiches der Fig. 12;
- Fig. 15: eine vergrößerte Darstellung eines mit "II" bezeich- neten Bereiches der Fig. 12;
- Fig. 16: eine vergrößerte Darstellung eines mit "III" be- zeichneten Bereiches der Fig. 12;
- Fig. 17a bis Fig. 17d: ein weiteres Ausführungsbeispiel eines erfindungsgemäß ausgestalteten Überrollschutzsys- tems, wobei jeweils ein Bereich des Antriebssystems in unterschiedlichen Stadien zwischen einer einge- fahrenen Ruhelage und einer ausgefahrenen Stützlage eines Überrollkörpers dargestellt ist;
- Fig. 18: einen Schnitt durch das Antriebssystem der Überroll- schutz-Vorrichtung gemäß Fig. 17a bis 17d entlang der Linie IV-IV in Fig. 17b;
- Fig. 19: eine dreidimensionale ausschnittsweise Ansicht des Antriebssystems der Überrollschutz-Vorrichtung gemäß Fig. 17a bis Fig. 17d, wobei insbesondere ein mit einer Zugfeder verbundener Mitnehmer für einen Über- rollkörper dargestellt ist;
- Fig. 20: einen vereinfachten Längsschnitt durch einen Bereich eines weiteren in Alleinstellung dargestellten Über- rollschutzsystems, wobei sich die gezeigte Überroll- schutz-Vorrichtung des Überrollschutzsystems in ei- ner abgesenkten Ruhelage befindet; und
- Fig. 21: eine Schnittdarstellung gemäß der Fig. 20, wobei sich hier die Überrollschutz-Vorrichtung in einer ausgefahrenen Stützlage befindet.

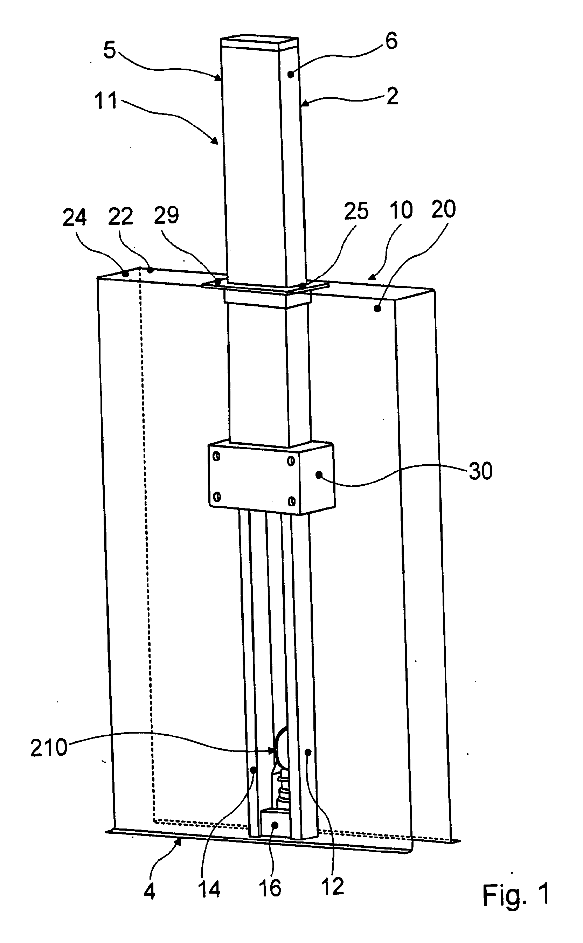

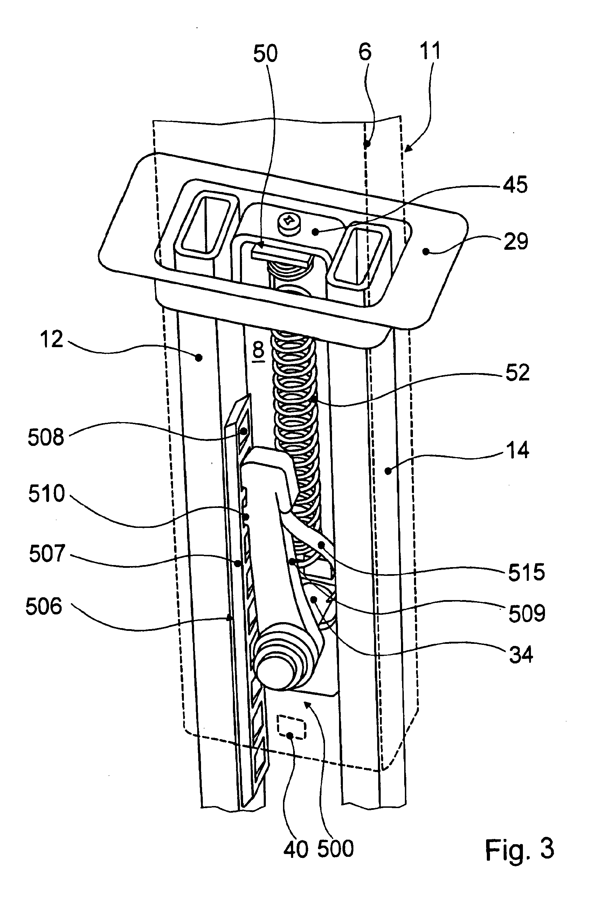

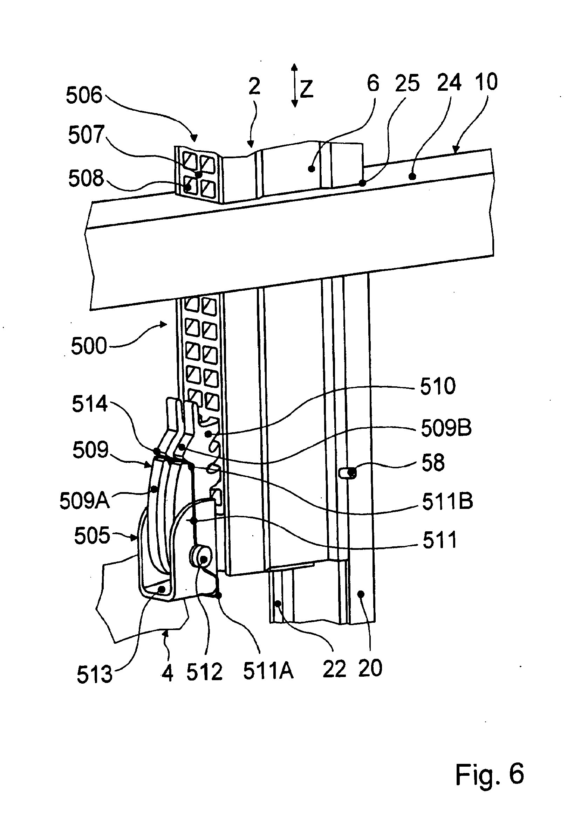

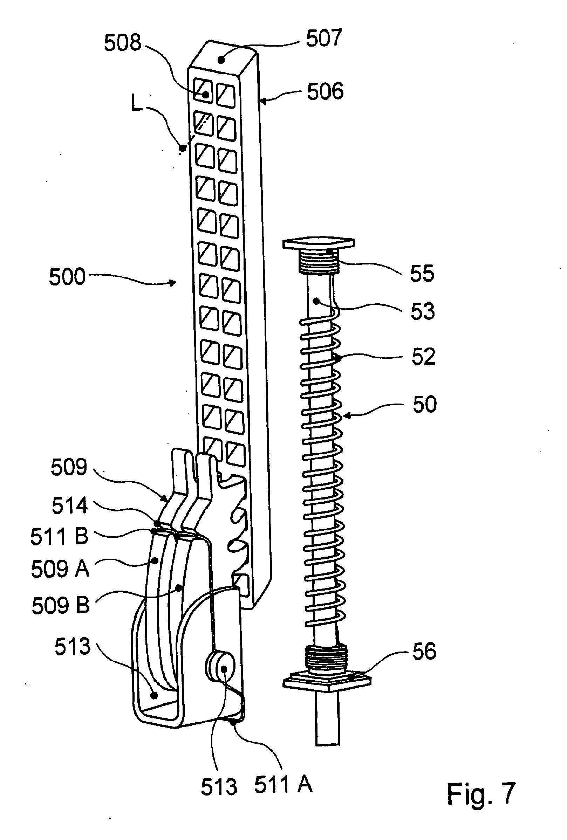

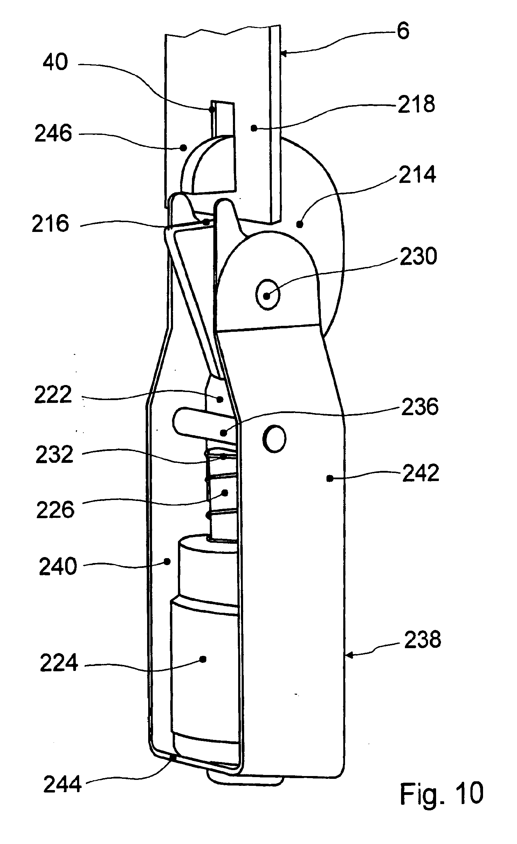

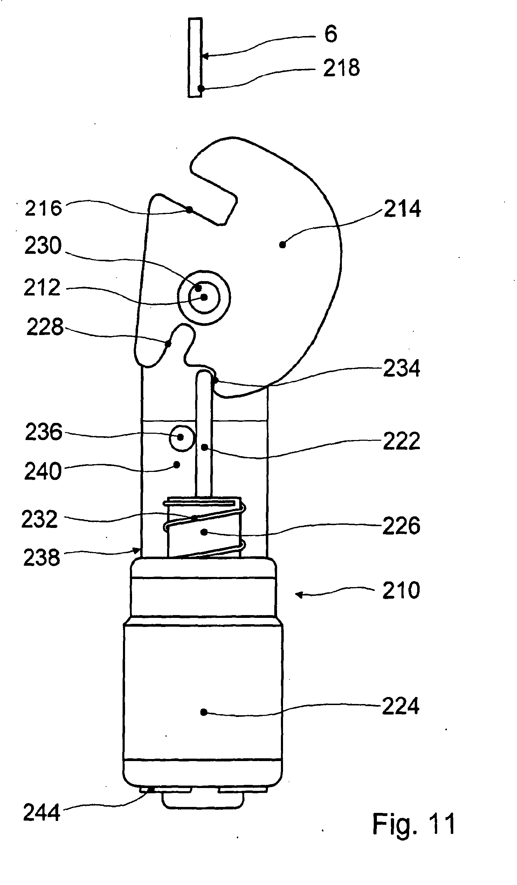

Die Fig. 1 bis Fig. 11 der Zeichnung zeigen zum Teil ausschnittsweise jeweils in vereinfachter Darstellung einen Bereich einer Fahrzeugquerwand 10 eines an sich in üblicher Weise aufgebauten Cabriolet-Fahrzeugs, welches ein Überrollschutzsystem 11 aufweist, welches mit jeweils einer einem im Fond angeordneten Fahrzeugsitz 26, 28 zugeordneten Überrollschutz-Vorrichtung 2 bzw. 3 ausgebildet ist. Die identisch aufgebauten Überrollschutz-Vorrichtungen 2, 3 weisen jeweils ein karosseriefestes erstes Modul 4 und ein zwischen einer abgesenkten Ruhelage und einer erhöhten Stützlage verfahrbares zweites Modul 5 mit einem Überrollkörper 6 auf, wobei das zweite Modul 5 bei einer Verlagerungsbewegung an dem ersten Modul 4 geführt ist.

Des Weiteren weist jede Überrollschutz-Vorrichtung 2, 3 eine lösbare Halteeinrichtung 210 zum Halten des zweiten Moduls 5 mit dem Überrollkörper 6 in seiner Ruhelage, eine Verriegelungsvorrichtung 500 bzw. 600, mittels der das zweite Modul 5 in einer von seiner Ruhelage abweichenden Position gegen einen in Richtung der Ruhelage wirkenden Kraftangriff selbsttätig abstützbar ist, und ein Antriebssystem 50 mit einer Zugfedervorrichtung 52, mittels der das zweite Modul 5 in seiner Ruheposition vorgespannt und im Bedarfsfall in Richtung seiner Stützlage verlagerbar ist, auf.

Gemäß den Ausführungen der Fig. 1 bis Fig. 11 ist die Zugfedervorrichtung 52 des Antriebssystems 50 jeweils als eine einzige Zugfeder ausgebildet, welche in Ausfahrrichtung des Überrollkörpers 6 angeordnet ist und mit ihrem oberen Ende mit einer fahrzeugfesten Federaufhängung 45, 55, 65 verbunden ist sowie mit ihrem unteren Ende direkt mit dem ausfahrbaren zweiten Modul 5 bzw. mit dem Überrollkörper 6 wenigstens wirkverbunden ist. Dabei ist die Zugfeder 52 jeweils wenigstens teilweise zumindest im Ruhezustand der betreffenden Überrollschutz-Vorrichtung 2, 3 in einem axialen Aufnahmekanal 8 des Überrollkörpers 6 auf Zug vorgespannt angeordnet und durch die lösbare Halteeinrichtung 210 gehalten.

Nach Freigabe durch die lösbare Halteeinrichtung 210 im Crash-Fall verkürzt sich die Zugfeder 52 und nimmt dabei den Überrollkörper 6 in Richtung seiner Stützlage mit.

Die Zugfeder 52 ist in den Figuren teilweise nur symbolisch dargestellt und kann grundsätzlich in jeder bekannten Bauart verwirklicht sein, so z. B. in herkömmliche Weise als eine Spiralfeder.

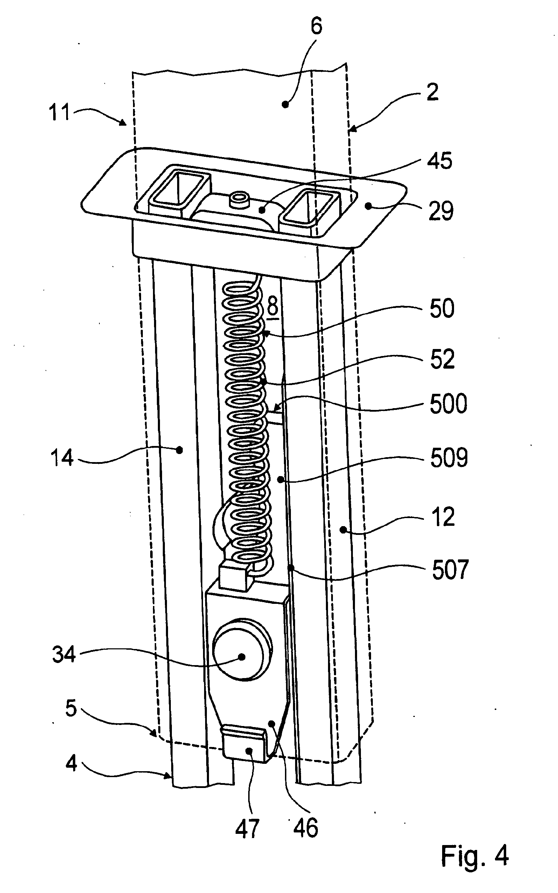

Bei der Ausführung gemäß Fig. 1 bis Fig. 4 ist die Zugfeder 52 mit ihrem oberen Ende mit einer fahrzeugfesten Federaufhängung 45 verbunden. Mit ihrem unteren Ende ist die Zugfeder 52 mit dem Überrollkörper 6 auf eine besonders deutlich in Fig. 4 ersichtliche Art und Weise über eine als Mitnehmer 46 ausgebildete Federanbindung wirkverbunden, wobei sich die Zugfeder 52 ausgehend von der Federaufhängung 45 frei in Richtung eines Fahrzeugbodens 7 bis zu der Federanbindung 46 erstreckt.

Der Mitnehmer 46 ist bei der gezeigten Ausführung mit einer Lasche 47 ausgebildet, welche hakenartig einen unteren Rand des in Fig. 4 strichliert gezeigten, kassettenartigen Überrollkörpers 6 untergreift und an einem Bolzen 34, welcher an zwei gegenüberliegenden Seiten des kassettenartigen Überrollkörpers 6 gelagert ist, befestigt ist.

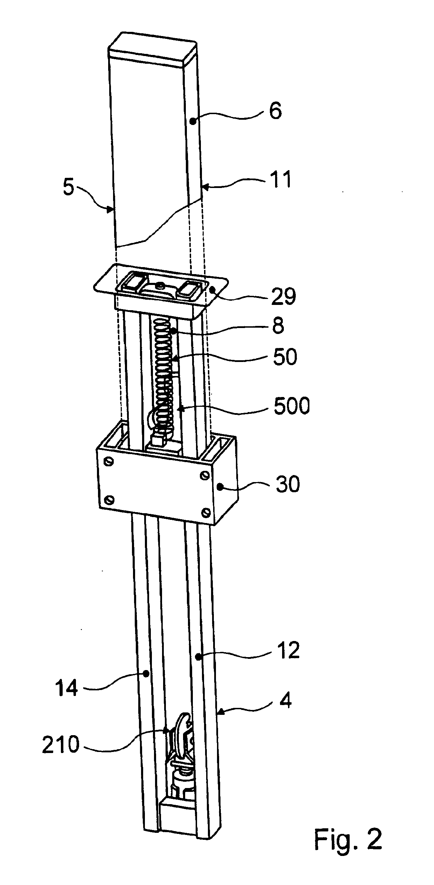

Wie den Fig. 2 bis Fig. 4 deutlich zu entnehmen ist, ist die Federaufhängung 45 bei dieser Ausführung als ein U-Profil ausgebildet, welches zwischen zwei vertikalen Streben 12, 14 des fahrzeugfesten ersten Moduls 4 angeordnet und mit diesen fest verbunden ist.

Die vertikalen Streben 12, 14, welche an dem Fahrzeugboden 7 bzw. einem Boden einer Fahrzeugquerwand 10 abgestützt sind und in diesem Bereich über ein Verbindungsprofil 16 miteinander verbunden sind, sind im Inneren des kassettenartigen Überrollkörpers 6 diesen führend angeordnet und dienen zur Kraftaufnahme bei einer im Crashfall auf die Überrollschutz-Vorrichtung 2 bzw. den Überrollkörper 6 einwirkenden Kraft.

Bei den Ausführungen gemäß Fig. 1 bis Fig. 7, insbesondere bei der Ausführung nach Fig. 1 bis Fig. 4, bildet eine vordere, einem Fahrgastraum zugewandte Wandung 20 der Fahrzeugquerwand 10 und eine hintere, einem heckseitigem Stauraum des Fahrzeugs zugewandte Wandung 22 der Fahrzeugquerwand 10 jeweils eine Wandung des hier kassettenartigen ersten Moduls 4, womit die Fahrzeugquerwand 10 integraler Bestandteil des Überrollschutzsystems 11 ist.

Zwischen einer oberen Begrenzung der vorderen Wandung 20 und der hinteren Wandung 22 der Fahrzeugquerwand 10 erstreckt sich bei diesen Ausführungen eine im Wesentlichen horizontale obere Begrenzungswand 24 der Fahrzeugquerwand 10, wobei in der oberen Begrenzungswandung 24 eine Austrittsöffnung 25 angeordnet ist, welche als erste Führungseinrichtung des ausfahrbaren, hier im Wesentlichen ebenfalls kassettenartigen zweiten Moduls 5 bzw. Überrollkörpers 6 dient und bei der Ausführung gemäß Fig. 1 bis Fig. 4 mit einem Führungsblech 29 verstärkt ist.

Bei der ersten Ausführung gemäß Fig. 1 bis Fig. 4 ist in einem mittleren Höhenbereich der Fahrzeugquerwand 10 eine blockartige zweite Führungseinrichtung 30 für das zweite Modul 5 angeordnet, wobei die zweite Führungseinrichtung 30 ein Kastenprofil mit mehreren Hohlräumen darstellt, welches sowohl mit der vorderen Wandung 20 als auch mit der hinteren Wandung 22 der Fahrzeugquerwand 10 vorliegend mittels Schraubverbindungen verbunden ist.

Die zweite Führungseinrichtung 30 bildet bei der Ausführung gemäß Fig. 1 bis Fig. 4 gleichzeitig einen Anschlag für den Überrollkörper 6 bei einer Ausfahrbewegung.

Die Überrollschutz-Vorrichtungen 2, 3 sind bei allen gezeigten Ausführungen jeweils mit einer nicht näher dargestellten, in üblicher Art und Weise ausgeführten Crash-Sensorik des Fahrzeugs verbunden, wobei hierdurch die Halteeinrichtung 210 angesteuert wird, mittels der der Überrollkörper 6 entgegen der Kraft der Zugfeder 52 in Ruhelage gehalten wird.

Bei Vorliegen eines Crash-Signals gibt die betreffende Halteeinrichtung 210 den Überrollkörper 6 frei, so dass der Überrollkörper 6 durch die Kraft der Zugfeder 52 in seine ausgefahrene obere Stützposition verlagert wird, in der er durch die Verriegelungseinrichtung 500 bzw. 600 gegen ein Wiedereinfahren gesichert wird.

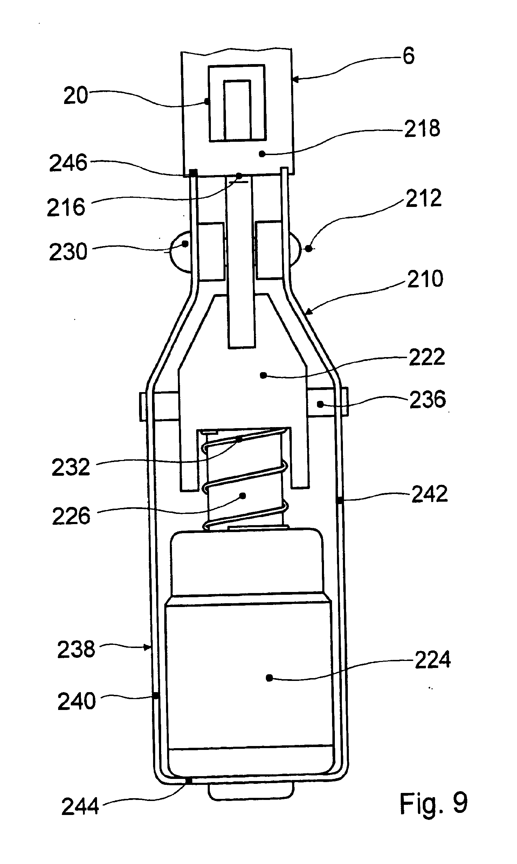

Die Fig. 9, Fig. 10 und Fig. 11 zeigen in vergrößertem Maßstab die bei den vorgestellten Ausführungen verwendete Halteeinrichtung 210 zum Halten des Überrollkörpers 6.

Die Halteeinrichtung 210 umfasst ein um eine feste Drehachse 212 schwenkbar gelagertes Verriegelungselement 214, welches im Wesentlichen scheibenartig ausgebildet ist und an seinem Umfang einen Klinkenabschnitt 216 aufweist, der hier als U-Ausnehmung ausgebildet ist und zum Zusammenwirken mit einem Verriegelungselement-Gegenkörper 218 an dem Überrollkörper 6 ausgelegt ist. Der Verriegelungselement-Gegenkörper 218 ist hier einfach als Haltelasche unterhalb einer Ausnehmung 40 an dem Überrollkörper 6 ausgebildet. Die Dimensionierung und Formgebung der Haltelasche 218 und der U-Ausnehmung des Klinkenabschnitts 216 ist derart aufeinander abgestimmt, dass die Haltelasche 218 bei einer Rotation des Verriegelungselements 214 um dessen Drehachse 212 problemlos aus dem Klinkenabschnitt 216 gleiten kann.

In alternativen Ausführungen kann statt der Haltelasche auch ein Bolzen, ein Absatz an dem Überrollkörper oder ein geeignetes Hakenelement als Verriegelungselement-Gegenköper vorgesehen sein.

In der abgesenkten Ruheposition des Überrollkörpers 6 ist das Verriegelungselement 214 durch ein Sperrglied 222, welches mit einem Aktuator 224 zusammenwirkt, gegen eine die Halteeinrichtung 210 lösende Rotation gesichert. Das Sperrglied 222 ist vorliegend als ein auf einem zylindrischen, durch den Aktuator 224 axial beweglichen Kolben befestigtes, flaches, zungenartiges Blechelement ausgebildet.

In Ruheposition des Überrollkörpers 6 greift das Sperrglied 222 in eine umfangsseitige Ausnehmung 228 des Verriegelungselements 214 ein, womit die Ausnehmung 228 eine Verriegelungsraste bildet, welche vorliegend in Ruheposition des Überrollkörpers 6 koaxial zu einer Längsachse des Sperrgliedes 222 und der Wirkrichtung des Aktuators 224, welche der Bewegungsrichtung des Überrollkörpers 6 entspricht, ausgerichtet ist und sich in Richtung eines die Drehachse 212 des Verriegelungselements 214 bildenden, exzentrisch angeordneten Bolzens 230 im Wesentlichen rechtwinklig zur Ausrichtung der U-förmigen Ausnehmung des Klinkenabschnitts 216 erstreckt.

Der Aktuator 224 wird bei einer von einer Sicherheitssensorik des Cabriolet-Fahrzeugs erkannten Unfallsituation von einem zugeordneten Steuergerät angesteuert und erfährt eine Zustandsänderung, welche eine translatorische Verschiebung des Sperrglieds 222 entgegen der Kraft einer Druckfeder 232 in Richtung des Aktuators 224 zur Folge hat. Das Sperrglied 222 wird durch diese translatorische Bewegung in Richtung des Aktuators 224 aus der umfangsseitigen Ausnehmung 228 an dem scheibenartigen Verriegelungselement 214 bis zu einem vordefinierten Punkt wie z. B. einen Anschlag herausgezogen, womit dieses in Folge der über die Haltelasche 218 des Überrollkörpers 6 ausgeübten Zugkraft eine Rotationsbewegung ausführt. Zur Begrenzung dieser Rotation dient am Umfang des eine Zweistufenscheibe darstellenden Verriegelungselementes 214 ein Anschlag 234, an dem das bei Auslösung der Halteeinrichtung aus der Ausnehmung 228 zurückgezogene Sperrglied 222 nach der Rotation des Verriegelungselementes 214 zur Anlage kommt.

Bei der gezeigten Ausführung ist eine Verschwenkung des Verriegelungselements 214 um die Drehachse 212 um ca. 30° zur Auslösung der Halteeinrichtung 210 ausreichend. Folglich ist die Umfangskontur des Verriegelungselements 214 in einem Bereich von annähernd 30° anschließend an die umfangsseitige Ausnehmung 228 radial zurückgenommen bis zu dem umfangsseitigen Anschlag 234.

Die Reversierung erfolgt auf einfache Weise durch eine Verdrehung des Verriegelungselementes 214 in sperrendem Sinne, bis der Klinkenabschnitt 216 wieder in Eingriff mit der Haltelasche 218 des in seine Ruheposition zurückverlagerten Überrollkörpers 6 gelangt. In dieser Position fluchtet die Ausnehmung 228 mit dem Sperrglied 222, das unter dem Druck der Druckfeder 232 in die Ausnehmung 228 einrastet und das Verriegelungselement 214 gegen Rotation sichert.

In abweichenden Ausführungsvarianten kann es vorgesehen sein, dass der Anschlag für das Sperrglied 222 an dem Verriegelungselement als ein Vorsprung an der Umfangskontur des Verriegelungselements ausgebildet ist, wobei der Anschlag auch als ein separates, an dem Verriegelungselement befestigtes Bauteil ausgeführt sein kann.

Wie den Figuren der Zeichnung weiter zu entnehmen ist, ist seitlich des Sperrglieds 222 ein Widerlager 236 in Form eines Bolzens vorgesehen, welcher zur Aufnahme von Kräften dient, welche im gelösten Zustand der Halteeinrichtung 210 seitens des Verriegelungselements 214 und des Anschlags 234 auf das Sperrglied 222 seitlich ausgeübt werden. Damit kann ein Verkippen des Sperrglieds 222 im gelösten Zustand der Halteeinrichtung 210 sicher vermieden werden.

Das Widerlager 236 ist wie der die Drehachse 212 bildende Bolzen 230 an einem ein Gehäuseelement darstellenden Grundkörper 238 der Halteeinrichtung 210 gelagert, wobei der Grundkörper 238 gegenüberliegende Seiten 240, 242 aufweist, zwischen denen der Bolzen 230 und das Widerlager 236 gelagert sind.

Bei der gezeigten Ausführung ist der Grundkörper 238 im Wesentlichen als ein U-Profil ausgebildet, welches z. B. ein umgeformtes Flachband sein kann. Der Grundkörper 238 weist an seinem im Einbauzustand oberen Ende, d. h. an den freien Enden der Seiten 240, 242, jeweils eine rampenartige Führung 246 zum gesicherten Zuführen des Überrollkörpers 6 in den Eingriffsbereich mit dem Klinkenabschnitt 216 des Verriegelungselements 214 auf. Zwischen den die U-Schenkel des U-Profils bildenden Seiten 240, 242 des Grundkörpers 238 erstreckt sich eine Traverse 244, welche als Sitz des Aktuators 224 dient. Der gezeigte Grundkörper 238 bildet somit eine Art Systemkäfig, welcher die Aufgaben eines Gehäuses erfüllt.

Der Aktuator 224 ist bei der Ausführung nach Fig. 9, Fig. 10 und Fig. 11 als ein elektromagnetischer Aktuator üblicher Bauweise ausgebildet, jedoch eignen sich auch nach einem anderen Wirkprinzip arbeitende Aktuatoren, wie z. B. piezoelektrische Aktuatoren, pyrotechnische Aktuatoren oder mit einem Schmelzeinsatz ausgestattete Aktuatoren, zur Anwendung bei der Halteeinrichtung 210.

In seiner ausgefahrenen Stützposition ist der Überrollkörper 6 durch die Verriegelungsvorrichtung 500 bzw. 600 selbsttätig gesperrt, wobei die Verriegelungseinrichtung 500 gemäß den gezeigten Ausführungen wenigstens eine erste Rasteinrichtung 505 bzw. 605 aufweist, die zum Abstützen des zweiten Moduls 5 mit einer zweiten Rasteinrichtung 506 bzw. 606 in Wirkverbindung bringbar ist und eine Bewegung des Überrollkörpers 6 in Richtung seiner Stützlage zulässt.

Gemäß den Ausführungen nach Fig. 1 bis Fig. 7 weist die erste Rasteinrichtung 505 eine in Richtung ihrer Wirkposition angefederte, bei der Ausführung nach Fig. 1 bis Fig. 4 an dem zweiten Modul 5 drehbar gelagerte Sperrklinke 509 mit Rastklauen 510 auf, die mit einem Rastelement 507 der hier an dem ersten Modul 4 angeordneten zweiten Rasteinrichtung 506 zusammenwirkt.

Gemäß der Ausführung nach Fig. 1 bis Fig. 4 ist die zweite Rasteinrichtung 506 der Verriegelungseinrichtung 500 an der ersten vertikalen Strebe 12 angeordnet, wobei die Sperrklinke 509 über eine hier als Blattfeder ausgebildete Federeinrichtung 515 an der zweiten vertikalen Strebe 14 des ersten Moduls 4 angefedert ist. Die Sperrklinke 509, welche aus einem Strangpressprofil hergestellt ist und einen scheibenartigen Körper darstellt, ist dabei an dem an zwei gegenüber liegenden Seiten des kassettenartigen Überrollkörpers 6 gelagerten Bolzen 34 drehbar angeordnet, an dem auch der Mitnehmer 46 angeordnet ist.

Das ebenfalls aus einem Strangpressprofil hergestellte und wenigstens annähernd leistenförmig ausgeführte Rastelement 507 der zweiten Rasteinrichtung 506 ist mit mehreren in Bewegungsrichtung Z des zweiten Moduls 5 hintereinander angeordneten, wabenartigen Aussparungen 508 ausgeführt, in welche die Sperrklinke 509 der ersten Rasteinrichtung 505 in Abhängigkeit einer Ausfahrstellung des Überrollkörpers 6 zu dessen Arretierung mit mehreren Rastklauen 510 eingreift.

Das Rastelement 507 ist hier aus einem Strangpressprofil mit kanalartigen in Längsrichtung des Pressstranges verlaufenden Aussparungen hergestellt und stellt einen scheibenartigen Bereich mit vordefinierter Breite dar, der unter einem in Bezug auf eine Längsachse L der Aussparungen 508 vordefinierten Ablängungswinkel schräg vom Strangpressprofil durch Sägen abgetrennt ist. Die Breite bzw. Tiefe des Rastelements 507 kann je nach Anwendungsfall bis hin zu einer quader- oder würfelförmigen Geometrie des Rastelements 507 variieren.

Die Aussparungen 508 des Rastelementes 507 sind vorliegend im Querschnitt rechteckig ausgebildet, jedoch können sie mit einer beliebigen anderen Querschnittsform, wie einem kreisförmigen oder ovalen Querschnitt, ausgeführt sein.

Eine Querschnittsform der Rastklauen 510 ist vorliegend zumindest im Anlagebereich der Rastklauen 510 an dem Rastelement 507 an den Querschnitt der Aussparungen 508 derart angepasst, dass in Wirkposition der Sperrklinke 509 ein angreifendes Kippmoment minimal ist.

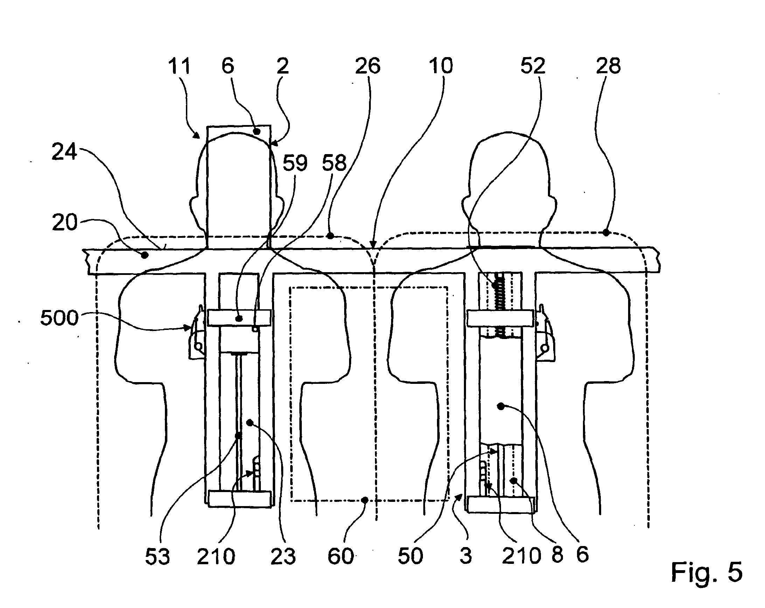

Die Ausführung gemäß Fig. 5 bis Fig. 8 unterscheidet sich von der Ausführung gemäß Fig. 1 bis Fig. 4 im Wesentlichen durch eine alternative Anordnung der Verriegelungsvorrichtung 500 zum Abstützen des Überrollkörpers 6 in seiner ausgefahrenen Position und ein modifiziertes Antriebssystem 50.

Die Fahrzeugquerwand 10 ist hier nur als Balkenkonstruktion ausgeführt, wobei die vordere Wandung 20 und die hintere Wandung 22 im Bereich der Überrollschutz-Vorrichtungen 2, 3 jeweils eine Aussparung 23 zur weiteren Gewichtsersparnis aufweisen. Abweichend hiervon könnte die Fahrzeugquerwand wie bei der Ausführung gemäß Fig. 1 bis Fig. 4 auch mit durchgehenden, sich im Wesentlichen über die Fahrzeugbreite und ihre Höhe erstreckenden Wandungen ausgebildet sein.

Abweichend von ersten Ausführung ist die Federaufhängung 55 hier an einem oberen Ende einer sich vertikal von dem Fahrzeugboden 7 weg erstreckenden Federführungsstange 53 ausgebildet, wobei sich die Zugfeder 52 in Richtung des Fahrzeugbodens 7 um die Federführungsstange 53 innerhalb des Aufnahmekanals 8 des Überrollkörpers 6 bis zu einem mit dem Überrollkörper 6 wirkverbundenen, an einem mittleren Bereich der Federführungsstange 53 verschieblich gelagerten Federteller 56 erstreckt.

Wenn der durch die lösbare Halteeinrichtung 210 im Ruhezustand gehaltene Überrollkörper 6 bei Erkennen einer Crash-Situation freigegeben wird, entspannt sich die Zugfeder 52 und nimmt bei ihrer Kontraktion den Überrollkörper 6 über den Federteller 6 und einen hieran anliegenden Anschlag des Überrollkörpers in Richtung seiner Stützlage mit.

Über einen Anschlagbolzen 58 am Außenumfang des Überrollkörpers 6 und ein Anschlagblech 59 an der Fahrzeugrückwand 10 wird die Ausfahrbewegung des Überrollkörpers 6 begrenzt, wobei der Überrollkörper 6 in dieser Stützposition durch die Verriegelungsvorrichtung 500 gegen ein unbeabsichtigtes Wiedereinfahren gesichert wird.

Die Verriegelungsvorrichtung 500 unterscheidet sich von der ersten Ausführung im Wesentlichen darin, dass die erste Rasteinrichtung 505 mit der Sperrklinke 509 an dem fahrzeugfesten ersten Modul 4 und die zweite Rasteinrichtung 505 mit dem Rastelement 507 an dem Überrollkörper 6 angeordnet ist.

Während das Rastelement 507 der zweiten Rasteinrichtung 505 analog dem Rastelement der ersten Ausführung ausgebildet ist, die Sperrklinke 509 hier modifiziert. Die Sperrklinke 509 ist in Richtung der Wirkposition, in der die Rastklauen 510 in die Aussparungen 508 eingreifen, über eine Federeinrichtung 511 angefedert und über einen Lagerbolzen 512 karosseriefest am karosseriefesten Modul 4 drehbar gelagert. Dazu ist die Federeinrichtung 511 mit einem ersten Endbereich 511A in Einbaulage in Anlage mit einem karosseriefesten Bauteil des ersten Moduls 4 und mit einem gegenüberliegenden zweiten Federende 511B in einer Ausnehmung 514 der Sperrklinke 509 eingreifend angeordnet.

Der Lagerbolzen 512 ist beidendig in einem U-förmig ausgeführten Halteelement 513 angeordnet und wird über die vorliegend als Drahtfeder ausgeführte Federeinrichtung 511, die eine Sicherung für den Lagerbolzen 512 darstellt, in Einbaulage gesichert bzw. gehalten. Das eine Art Haltebügel oder Käfig darstellende Halteelement 513 ist fest mit dem ersten Modul 4 verbunden und somit karosserieseitig festgelegt, wodurch in Abstützlage des Überrollkörpers 6 angreifende Kräfte über das Halteelement 513 in die Fahrzeugkarosserie einleitbar und in gewünschtem Umfang abstützbar sind.

Bei dem in den Fig. 5 bis Fig. 7 dargestellten Ausführungsbeispiel ist die Sperrklinke 509 mit zwei zueinander beabstandet parallel auf dem Lagerbolzen 512 angeordneten Sperrklinkenscheiben 509A, 509B ausgebildet, die jeweils drei in Bewegungsrichtung hintereinander angeordnete Rastklauen 510 aufweisen und die in Wirkposition der Sperrklinke 509 jeweils in eine von mehreren in einer Reihe nebeneinander und in Reihen untereinander angeordneten Aussparungen 508 des Rastelementes 507 eingreifen.

Dazu sind die Rastklauen 510 der Sperrklinkenscheiben 509A und 509B, welche jeweils in einer senkrecht zur Bewegungsrichtung des Überrollkörpers 6 verlaufenden Reihe angeordnet sind, um wenigstens eine Stegbreite zwischen zwei Aussparungen 508 des Rastelementes 507 einer Reihe, die quer zur Bewegungsrichtung Z des Rastelementes 507 verläuft und mit einer Reihe der Rastklauen 510 korrespondiert, zueinander beabstandet angeordnet. Die Sperrklinke 509 ist aus einem kostengünstig herstellbaren Strangpressprofil gefertigt und bei dem dargestellten Ausführungsbeispiel mit gleich bleibender Scheibenbreite ausgeführt.

Die wabenartigen Aussparungen 508 des Rastelementes 507 verlaufen von der der Sperrklinke 509 zugewandten Seite des Rastelementes 507 in Richtung der der Sperrklinke 509 abgewandten Seite des Rastelementes 507 in Bezug auf die Ausfahrbewegungsrichtung Z des Überrollkörpers 6 schräg ansteigend und stellen für die Rastklauen 510 der Sperrklinke 509 eine derartige Hinterschneidung dar, dass diese in Abstützlage des Überrollkörpers 6 sicher mit dem Rastelement 507 einrasten, womit der Überrollkörpers 6 mit hoher Sicherheit in seiner Stützposition gehalten wird.

Die schräge Ausführung der kanalförmigen Aussparungen 508 des Rastelementes 507 bewirkt auch hier bei einem Ausfahren des Überrollkörpers 6, bei dem die Rastklauen 510 aufgrund entsprechend geformter Oberflächen gegen die Federkraft der Federeinrichtung 511 an dem Rastelement 507 ohne Verrastung abgleiten, eine Reduzierung der zwischen der Sperrklinke 509 und dem Rastelement 507 auftretenden Reibungskräfte.

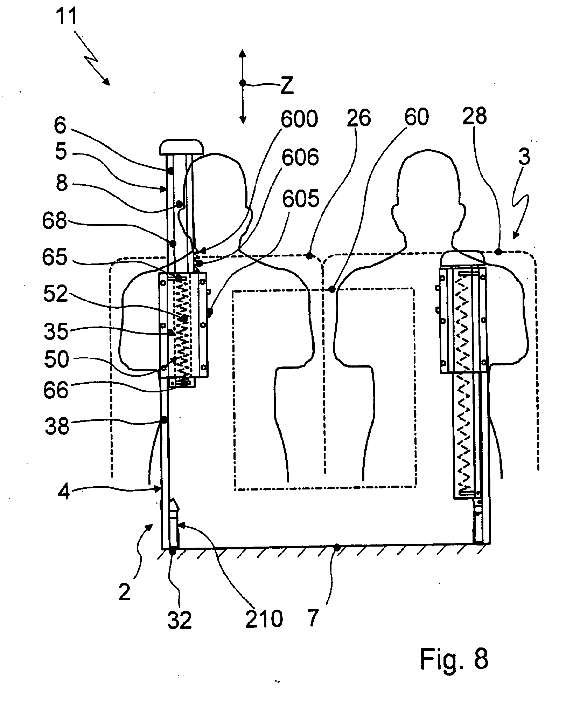

Die Ausführung gemäß Fig. 8 unterscheidet sich von den Ausführungen gemäß Fig. 1 bis Fig. 7 im Wesentlichen durch eine vereinfachte Verriegelungsvorrichtung 600 zum Abstützen des Überrollkörpers 6 in seiner ausgefahrenen Position und ein modifiziertes Antriebssystem 50.

Der Überrollkörper 6 ist bei der Ausführung nach Fig. 8 stangenartig ausgeführt und weist in seinem Inneren ebenfalls einen axialen Aufnahmekanal 8 für die Zugfeder 52 auf. Bei dem gezeigten Ausführungsbeispiel stellt der Überrollkörper 6 einen geraden Stangenkörper dar, wenngleich in weiteren Ausführungen gegebenenfalls auch eine Krümmung in seinem oberen Bereich vorgesehen sein kann. Der Querschnitt des Überrollkörpers 6 ist hier im Wesentlichen rund, wobei die innere Querschnittskontur kreisrund oder oval sein kann.

Bei der Ausführung gemäß Fig. 8 ist die nur prinzipmäßig angedeutete Zugfeder 52 in dem Aufnahmekanal 8 des Überrollkörpers 6 nicht sichtbar eingefasst, wobei die die Federaufhängung als ein sich im Wesentlichen horizontal in den Aufnahmekanal 8 des Überrollkörpers 6 erstreckendes, bolzenförmiges Halteelement 65 ausgebildet ist.

Von diesem Halteelement 65 erstreckt sich die Zugfeder 52 in dem Überrollkörper 6 in Richtung des Fahrzeugbodens 7 bis zu einer mit dem Überrollkörper 6 verbundenen Federanbindung 66, welche in einfacher Ausgestaltung als ein zwischen gegenüber liegenden Wänden des Überrollkörpers 6 angeordneter Bolzen ausgebildet sein kann, an dem die Zugfeder 52 eingehängt ist.

Ein in Fig. 8 nur symbolisch angedeuteter, sich über die Verschiebestrecke des Überrollkörpers 6 in dessen Axialrichtung erstreckender Durchtrittsschlitz 68 für das Halteelement 65 stellt dabei die Verschiebbarkeit des Überrollkörpers 6 sicher.

Bei der Ausführung nach Fig. 8 ist ein als Führungseinrichtung des Überrollkörpers 6 dienendes Rohrprofil 35 mit seinem unteren Rand gegenüber einem Fußelement 32 des ersten Moduls 4 beabstandet angeordnet, wobei das Rohrprofil 35 in Ruhelage des Überrollkörpers 6 einen oberen Endbereich des Überrollkörpers 6 umgreift und in Stützlage des Überrollkörpers 6 den unteren Endbereich des Überrollkörpers 6 aufnimmt. Die Verbindung des Rohrprofils 35 mit dem Fußelement 32 des karosseriefesten Moduls 4 erfolgt hier über ein Verbindungsprofil 38, welches an der der Fahrzeugseite zugewandten Seite des Rohrprofils 35 in einen korrespondierend geformten Profilabschnitt eingeführt und hiermit verschraubt ist.

Bei den vorliegenden Ausführungen sind die Überrollschutz-Vorrichtungen 2, 3 zweier Fahrzeugsitze 26, 28 einer Sitzreihe jeweils in entgegengesetzter Richtung im Wesentlichen au-βermittig zu dem zugeordneten Fahrzeugsitz 26 bzw. 28 angeordnet, so dass zwischen den Überrollschutz-Vorrichtungen 2, 3 ausreichend Platz für eine großzügige Durchladeöffnung 60 gegeben ist, mittels der sperrige Güter von einem heckseitigen Aufnahmeraum bzw. Kofferraum in den Fahrzeuginnenraum geführt werden können. In Fig. 5 und Fig. 8 ist die Durchladeöffnung 60 lediglich schematisch dargestellt und kann hinsichtlich ihrer Größe und Geometrie an die jeweils vorliegenden Verhältnisse angepasst sein.

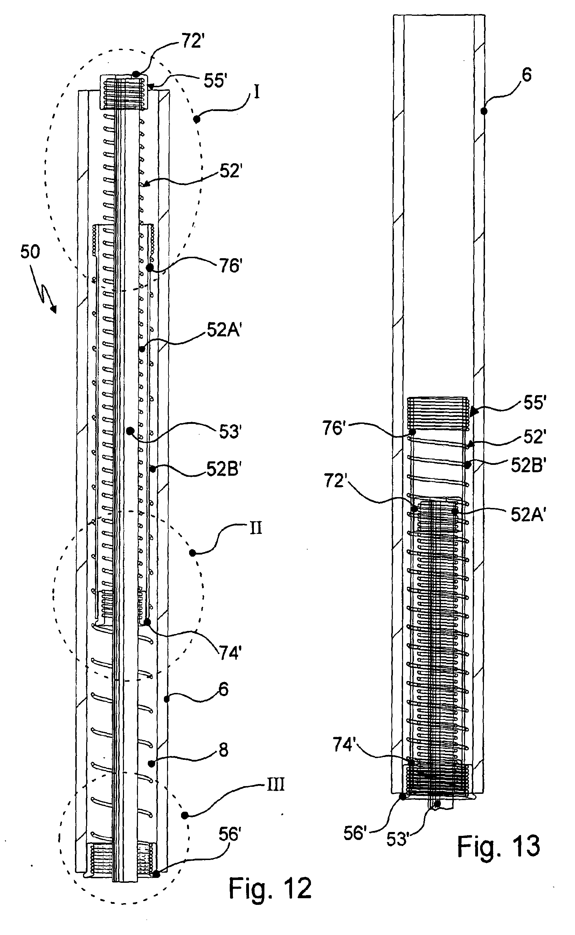

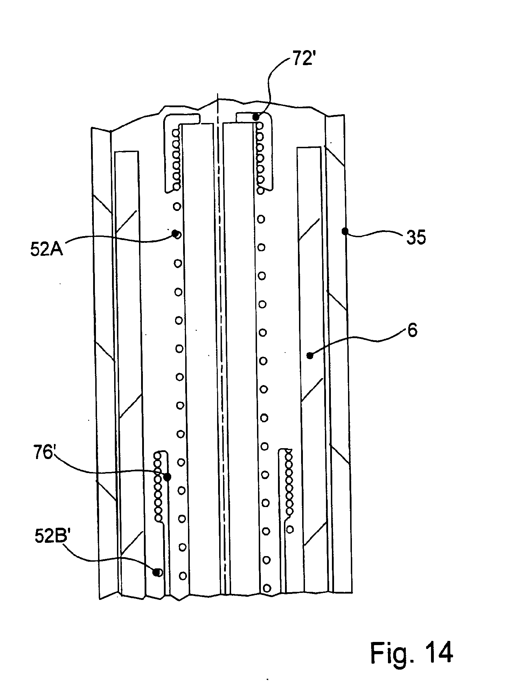

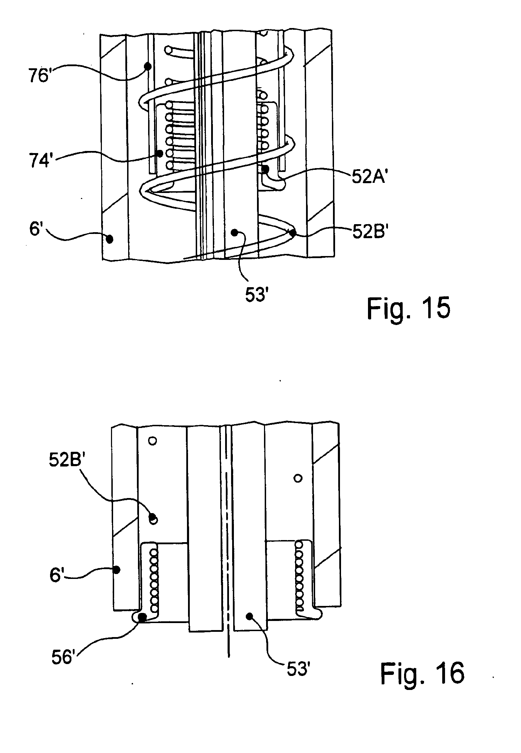

Die Fig. 12 bis Fig. 16 zeigen ausschnittsweise eine hinsichtlich des Antriebssystems 50 modifizierte Überrollschutz-Vorrichtung 2 bzw. 3, wobei das Antriebssystem 50 eine Zugfedervorrichtung 52' aufweist, welche wie bei den zuvor gezeigten Ausführungen mit ihrem einen Ende mit einer fahrzeugfesten Federaufhängung 55' verbunden ist und mit ihrem anderen Ende direkt mit dem Überrollkörper 6 über einen daran angreifenden Federteller 56' wirkverbunden ist.

Die Zugfedervorrichtung 52' ist hier mit zwei in Ausfahrrichtung des Überrollkörpers 6 angeordneten Zugfedern 52A', 52B' ausgebildet, welche ineinander angeordnet sind, wobei eine innere Zugfeder 52A' eine höhere Federsteife als eine äußere Zugfeder 52B' aufweist.

Wie den Fig. 12 bis Fig. 16 zu entnehmen ist, ist die innere Zugfeder 52A' an einer oberen Aufnahme 72' befestigt, welche auf eine am Fahrzeugboden abgestützte Federführungsstange 53' aufgesetzt ist. Die Federführungsstange 53' ist vorliegend mit einem kreisförmigen Querschnitt ausgebildet, jedoch kann sie zur Materialeinsparung und Gewichterleichterung bezüglich ihres Querschnitts auch in der Art eines mehrzackigen, z. B. dreizackigen Sterns ausgebildet sein.

Von der oberen Aufnahme 72' erstreckt sich die innere Zugfeder 52A' nach unten bis zu einer unteren Aufnahme 74', welche tellerartig ausgebildet ist und an ihrem Rand eine rohrförmige obere Aufnahme 76' der äußeren Zugfeder 52B' untergreift. Die obere Aufnahme 76' der äußeren Zugfeder 52B' umgreift rohrförmig in dem in Fig. 12 gezeigten Ruhezustand den überwiegenden axialen Erstreckungsbereich der inneren Zugfeder 52A', wobei die äußere Zugfeder 52B' an dem in Einbauzustand oberen Ende der rohrförmigen Aufnahme 76' befestigt ist und sich in Richtung Fahrzeugboden bis zu dem den Überrollkörper 6 untergreifenden Federteller 56' erstreckt.

Zur Montage wird die innere Zugfeder 52A' mit ihrer oberen Aufnahme 72' und ihrer unteren Aufnahme 74' vormontiert. Dieser Zusammenbau wird auf die Federführungsstange 53' aufgesetzt, wonach die mit der rohrförmigen oberen Aufnahme 76' und dem Federteller 56' vormontierte äußere Zugfeder 52B' über die innere Zugfeder 52A' montiert wird, wobei die rohrförmige obere Aufnahme 76' der äußeren Zugfeder 52B' auf der unteren Aufnahme 74' der inneren Zugfeder 52A' gelagert wird. Die derart zusammengebaute Zugfedervorrichtung 52' wird in die fahrzeugfeste Führungseinrichtung 35 der Überrollschutz-Vorrichtung 2 bzw. 3 eingesetzt und gesichert. Hiernach wird der Überrollkörper 6 in die Führungseinrichtung 35 über die aus der Führungseinrichtung 35 herausragende Zugfedervorrichtung 52' montiert, wobei der Überrollkörper 6 auf der als Federteller 56' ausgebildeten unteren Aufnahme der äußeren Zugfeder 52B' abgestützt wird.

Der Überrollkörper 6 spannt beim Herunterfahren in die Ruheposition bzw. Bereitschaftsposition die äußere Zugfeder 52B' und verringert so die Bauhöhe der Zugfedervorrichtung 52'. Bei zunehmender Kraft wird während der weiteren Abwärtsbewegung des Überrollkörpers 6 die stärkere innere Zugfeder 52A' ebenfalls gespannt. In der untersten Position des Überrollkörpers 6 ist die maximale Federspannung der Zugfedervorrichtung 52' und die erforderliche Bauhöhe zur Unterbringung in der Führungseinrichtung 35 der Überrollschutz-Vorrichtung 2 erreicht.

Bei einer Auslösung des Überrollkörpers 6 wird dieser durch die äußere Zugfeder 52B' und die innere Zugfeder 52A' in Richtung seiner Stützposition verlagert, wobei die äußere Zugfeder 52B' ebenfalls wirkt, während sich die innere, axial in Ausfahrrichtung versetzt angeordnete Zugfeder 52A' entspannt und die Zugfedervorrichtung 52' eine in Fig. 13 gezeigte entspannte Lage in Stützposition des Überrollkörpers 6 einnimmt.

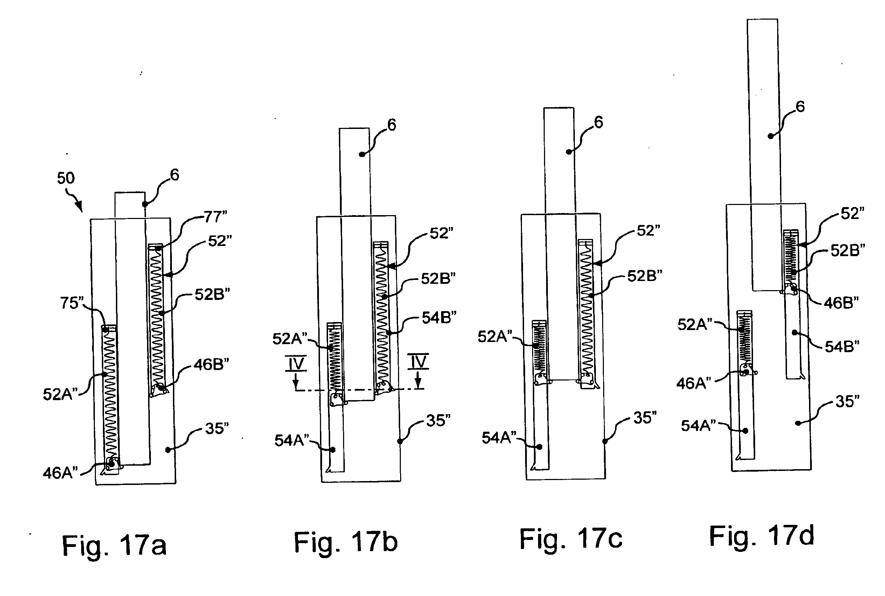

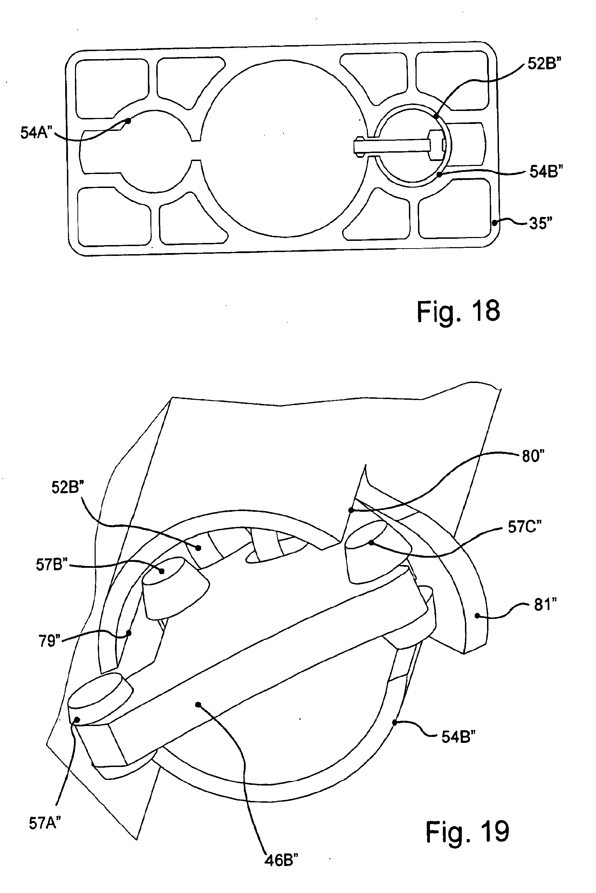

Eine weitere Ausgestaltungsmöglichkeit des Antriebssystems 50 mit einer alternativen Zugfedervorrichtung 52" ist in Fig. 17a bis Fig. 17d sowie in Fig. 18 und Fig. 19 gezeigt. Dabei ist die Zugfedervorrichtung 52" ebenfalls mit zwei Zugfedern 52A" und 52B'' ausgebildet. Die Zugfedern 52A" und 52B'' sind hier um den Umfang des Überrollkörpers 6 sowie axial versetzt zueinander angeordnet, wobei die Zugfedern 52A'', 52B'' jeweils in einer rohrförmigen Aufnahme 54A" bzw. 54B'' in einer fahrzeugfesten Führungseinrichtung 35'' angeordnet sind. Hierin sind die Zugfedern 52A", 52B'' jeweils an einer bolzenförmig ausgebildeten oberen Aufhängung 75" bzw. 77" aufgehängt und nach unten auf Zug vorgespannt, wobei die untere Federaufnahme 46A'' bzw. 46B'' gleichzeitig einen Mitnehmer für den Überrollkörper 6 bildet und jeweils scheibenartig mit drei Rollen 57A'', 57B'', 57C" an ihrem Umfang ausgebildet ist.

Die untere Federaufnahme 46A'' bzw. 46B'' ist dabei derart in dem Aufnahmerohr 54A" bzw. 54B'' der vorliegend ein Kastenprofil darstellenden Führungseinrichtung 35'' angeordnet, dass zwei Rollen 57A'', 57B'' dem Überrollkörper 6 zugewandt sind und die dritte Rolle 57C" dem Überrollkörper 6 abgewandt ist, wobei die rohrförmige Aufnahme 54A", 54B'' im Bereich der dem Überrollkörper 6 zugewandten Rollen 57A", 57B'' partiell einen Durchtrittsschlitz 79'' aufweist, durch den die Rollen 57A'', 57B'' in Anlage an den Überrollkörper 6 gelangen können.

Die untere Federaufnahme 46A'' bzw. 46B'' und die Anordnung ihrer Rollen 57A'', 57B'', 57C'' ist dabei so dimensioniert, dass die einen Mitnehmer bildende untere Federaufnahme 46A'', 46B'' in einer nicht in Wirkeingriff an dem Überrollkörper 6 stehenden Position mit der dem Überrollkörper 6 abgewandten Rolle 57C'' durch eine Ausnehmung 80'' an dem Aufnahmerohr 54A'', 54B'' schwenkbar ist, während die beiden dem Überrollkörper 6 zugewandten Rollen 57A'',57B'' an dem Überrollkörper 6 anliegen. Vorliegend ist die Ausnehmung 80" durch eine aus dem Material des Aufnahmerohrs 54A'', 54B'' geformte Materialfahne 81'' ausgebildet, welche als Abstützung der dritten Rolle 57C" dient.

Bei der gezeigten Ausführung ist die untere Federanbindung sowohl der axial unteren ersten Zugfeder 52a" als auch der axial in Ausfahrrichtung des Überrollkörpers versetzt angeordneten zweiten Zugfeder 52B'' sowie die jeweilige rohrförmige Aufnahme beider Federn aus Gründen der Einfachheit baugleich ausgeführt. Eine Auslenkung der unteren Federaufnahme bzw. des Mitnehmers 46A'', 46B'' erfährt jedoch nur die untere Federaufnahme 46B'' der zweiten bei einer Ausfahrbewegung des Überrollkörpers 6 in Wirkeingriff mit diesem gelangenden Zugfeder 52B", da diese in Ruheposition von dem Überrollkörper 6 weg ausgelenkt angeordnet ist, während der Mitnehmer bzw. die untere Federaufnahme 46A" der zuerst bei einer Ausfahrbewegung des Überrollköpers 6 in Wirkeingriff mit diesem gelangenden Zugfeder 52A'' auch in Ruheposition gemäß Fig. 17a mit dem Überrollkörper 6 in Wirkeingriff steht und diesen untergreift.

Bei der Montage der Zugfedervorrichtung 52", deren Federn je nach Federtyp und Arbeitsleistung sowie Länge des zu fördernden Überrollkörpers um den Überrollkörper kreisförmig angeordnet sein können, wird der Überrollkörper 6 zunächst bis zum Mitnehmer 46B'' der zweiten, oberen Zugfeder 52B'' in die Führungseinrichtung 35'', die in Fig. 18 ohne den Überrollköper dargestellt ist, eingeschoben, wobei der Mitnehmer 46B'' der zweiten Zugfeder 52B'' in seine unterste Position, in der er eine Auslenkung erfährt, verschoben wird.

Kurz vor Erreichen der untersten Position des Mitnehmers 46B'' an der zweiten Zugfeder 52B'' wird der mit der ersten, unteren Zugfeder 52A'' verbundene Mitnehmer 46A'' bereits von dem Überrollköper 6 erreicht und in Richtung der Bereitschafts- bzw. Ruhelage des Überrollköpers 6 mitgeführt. Nach weiterem Absenken des Überrollköpers 6 mit beiden sich im Eingriff befindlichen Mitnehmern 46A'', 46B'' wird der an der zweiten Zugfeder 52B'' angebundene Mitnehmer 46B'' durch die Ausnehmung 80" der rohrförmigen Federaufnahme 54B'' in unterster Position der zweiten, oberen Zugfeder 52B'' ausgelenkt und verliert durch das Herausschwenken aus der Federaufnahme 54B'' seine Kraftwirkung auf den Überrollkörper 6.

In seiner ausgeschwenkten Stellung verharrt somit der mit der zweiten Zugfeder 52B'' verbundene Mitnehmer 46B'' an der rohrförmigen Federaufnahme 54B'' abgestützt mit maximal erreichter Federspannung der zweiten Zugfeder 52B'' in einer Bereitschaftsposition. Durch das weitere Absenken des Überrollkörpers 6 mit dem nunmehr allein in Wirkeingriff mit dem Überrollkörper 6 befindlichen, mit der ersten Zugfeder 52A'' verbundenen Mitnehmer 46A" wird die Federspannung bis zum Erreichen der Ruhelage des Überrollkörpers 6 bis zum gewünschten Maximalwert erhöht.

Dabei ist es in weiteren Ausführungen auch möglich, dass mehrere axial gestaffelt angeordnete Federn zur Realisierung der maximal gewünschten Federspannung der Zugfedervorrichtung zum Einsatz kommen. Somit besteht auch bei einem sehr langen Förderweg des Überrollkörpers keine Einschränkung hinsichtlich der Paketgröße sowie der maximalen Stauchung und Dehnung einer Einzelfeder. Die Antriebskraft des gesamten Antriebssystems kann durch die entsprechende Anordnung der Einzelfedern kontrolliert und begrenzt werden.

Bei der Auslösung des Überrollkörpers 6 wird dieser entsprechend den in den Fig. 17a bis 17d gezeigten Stadien der Ausfahrbewegung jeweils bei Erreichen des Mitnehmers 46A'', 46B'' der höher positionierten Zugfeder mit der Maximalspannung der in Eingriff mit dem Überrollköper 6 gelangenden Zugfeder gefördert, indem die dem Überrollkörper 6 zugewandten Rollen 57A", 57B'' des zugeordneten Mitnehmers 46B'' seitlich und unterhalb des Überrollkörpers 6 an diesem anliegen.

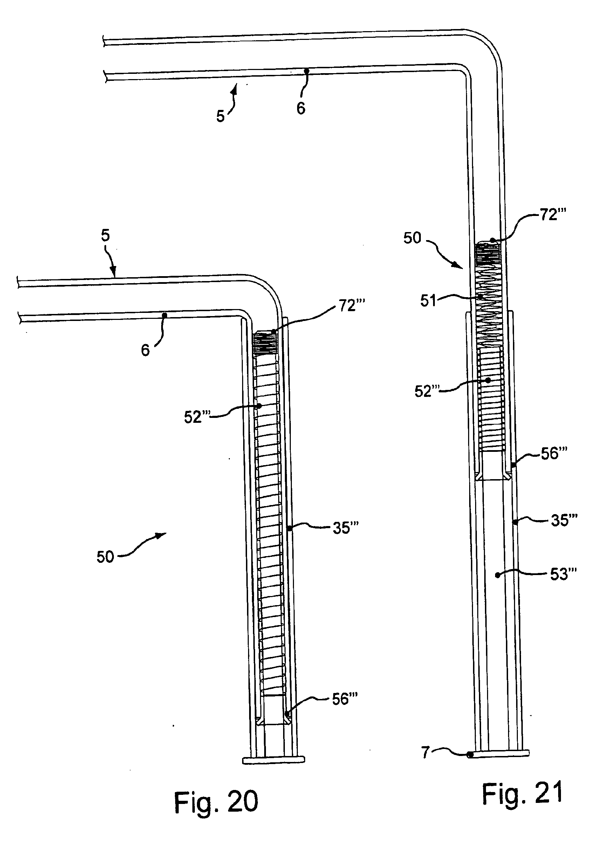

Die Fig. 20 und Fig. 21 zeigen eine weitere Ausgestaltungsmöglichkeit des Antriebssystems 50, bei der im Unterschied zu den zuvor gezeigten Ausführungen die Zugfedervorrichtung 52''' mit ihrem einen Ende an einem oberen Ende einer fahrzeugfest abgestützten Druckfeder 51 gelagert ist. Mit ihrem anderen Ende ist die Zugfedervorrichtung 52''' wie bei den zuvor gezeigten Ausführungen direkt mit dem Überrollkörper 6 des ausfahrbaren zweiten Moduls 5 verbunden.

Die Zugfedervorrichtung 52''' wird dabei durch eine einzige Zugfeder gebildet, welche mit einer tellerartigen oberen Federaufnahme 72''' auf der an dem Fahrzeugboden 7 abgestützten und in einem Federführungsrohr 53''' geführten Druckfeder 51 aufliegt und mit ihrem unteren, dem Fahrzeugboden 7 zugewandten Ende mit einer unteren Federaufnahme 56''' verbunden ist, welche einen federtellerartigen Mitnehmer für den Überrollkörper 6 bildet und diesen mit einem Randbereich untergreift.

Um ein Verhaken der Zugfeder 52''' und der Druckfeder 51 bei einem Überführen des Überrollkörpers 6 von einer in Fig. 20 dargestellten abgesenkten Ruhelage in eine in Fig. 21 dargestellte obere Stützlage zu vermeiden, sind die Federn 52''' und 51 vorliegend mit entgegengesetzten Wendelrichtungen ausgebildet.

Zur Montage des Antriebssystems 50 in der Ausgestaltung gemäß Fig. 20 und Fig. 21 wird zunächst die Federführungsstange 53''' mit der darin angeordneten Druckfeder 51 in die Führungseinrichtung 35''' des Überrollkörpers 6 eingesetzt, wonach die mit der oberen Federaufnahme 72''' und der unteren Federaufnahme 56''' vormontierte Zugfeder 52''' über die Druckfeder 51 und die Federführungsstange 53''' geführt wird. Anschließend wird der Überrollkörper 6 in die Führungseinrichtung 35''' über die Zugfedervorrichtung 52''' eingesetzt, wobei die einen Mitnehmer bildende untere Zugfederaufnahme 56''' mit Absenken des Überrollkörpers 6 entgegen seiner Ruhelage in Richtung des Fahrzeugbodens 7 gedrückt wird. Dabei wird sowohl die Zugfeder 52''' als auch die Druckfeder 51 gespannt. Die mit einem bestimmten Leistungsvermögen ausgestattete Druckfeder 51 verringert durch die kontinuierlich steigende Kraft eine entsprechend erforderliche Bauhöhe der Zugfedervorrichtung.

Bei der Auslösung des Überrollkörpers 6 wirken die beiden Federn 52''' und 51 gleichzeitig. Die Verteilung der Antriebskraft auf die einzelnen Federn 52''' und 51 kann durch entsprechende Wahl der Federsteifigkeit festgelegt werden, wobei die Zugfeder 52''' beispielsweise härter als die Druckfeder 51 ausgelegt sein kann.

Das vorgestellt Überrollschutzsystem kann in jeder Ausführung mit einer Fahrzeugquerwand wie oben beschrieben ein Multifunktionsmodul bilden, welches die Funktionalitäten einer Überrollschutz-Vorrichtung, einer Durchladeöffnung, einer Fahrzeugquerversteifung, einer Rückhaltegurtaufnahme und einer Sitzbefestigung verbinden kann, wobei das gesamte Multifunktionsmodul gegebenenfalls in seiner vorgeschlagenen Kompaktbauweise separat außerhalb des Fahrzeugs komplettiert und in ein Fahrzeug zur Endmontage eingesetzt werden kann.

Neben der Einbindung der oben genannten Funktionalitäten ist es auch denkbar, dass die Baugruppe aus Fahrzeugquerwand und Überrollschutzsystem Teil eines Verdecks eines Cabriolet-Fahrzeugs ist bzw. dass ein Verdeckgestänge an die die Überrollschutz-Vorrichtungen aufweisende Bauteilgruppe angebunden ist.

Die Zuordnung der einzelnen beschriebenen Komponenten zu den jeweils gezeigten Ausführungsbeispielen ist nur beispielhaft, so dass eine beliebige Kombination der beschriebenen Komponenten und deren Zusammenfügen möglich ist.

## Patentansprüche

1. Überrollschutzsystem für ein Kraftfahrzeug, bestehend aus wenigstens einer Überrollschutz-Vörrichtung (2, 3) für wenigstens einen Fahrzeugsitz (26, 28)
- mit einem karosseriefest angeordneten ersten Modul (4) mit Führungseinrichtungen (25, 30, 35) für ein hierin zwischen einer abgesenkten Ruhelage und einer erhöhten Stützlage verfahrbares zweites Modul (5) mit einem Überrollkörper (6);
- mit einer lösbare Halteeinrichtung (210) zum Halten des zweiten Moduls (5) in seiner Ruhelage;
- mit einer Verriegelungsvorrichtung (500, 600), mittels der das zweite Modul (5) in einer von seiner Ruhelage abweichenden Position gegen einen in Richtung der Ruhelage wirkenden Kraftangriff selbsttätig abstützbar ist; und
- mit einem Antriebssystem (50) mit einer Zugfedervorrichtung (5252', 52", 52'''), mittels der das zweite Modul (5) in seiner Ruheposition vorgespannt und im Bedarfsfall in Richtung seiner Stützlage verlagerbar ist, **dadurch gekennzeichnet,**
**dass** die Zugfedervorrichtung (52, 52', 52'', 52''') mit ihrem oberen Ende mit einer fahrzeugfesten Federaufhängung (45, 55, 65) verbunden ist oder an einem oberen Ende einer fahrzeugfest abgestützten Druckfeder (51) gelagert ist und mit ihrem unteren Ende direkt mit dem Überrollkörper (6) des ausfahrbaren zweiten Moduls (5) wirkverbunden ist sowie in Ausfahrrichtung des Überrollkörpers (6) angeordnet ist.

2. Überrollschutzsystem nach Anspruch 1,
**dadurch gekennzeichnet,**
**dass** die Zugfedervorrichtung als einzelne Zugfeder (52, 52''') ausgebildet ist.

3. Überrollschutzsystem nach Anspruch 1,
**dadurch gekennzeichnet,**
**dass** die Zugfedervorrichtung (52', 52'') wenigstens zwei Zugfedern (52A', 52B'; 52A", 52B'') aufweist.

4. Überrollschutzsystem nach Anspruch 3,
**dadurch gekennzeichnet,**
**dass** die Zugfedern (52A', 52B'; 52A'', 52B") gestaffelt wirkend angeordnet sind.

5. Überrollschutzsystem nach Anspruch 4,
**dadurch gekennzeichnet,**
**dass** die Zugfedern (52A', 52B') ineinander angeordnet sind, wobei eine innere Zugfeder (52A') eine höhere Federsteife als eine äußere Zugfeder (52B') aufweist.

6. Überrollschutzsystem nach Anspruch 4 oder 5,
**dadurch gekennzeichnet,**
**dass** die Zugfedern (52A'', 52B'') um den Überrollkörper (6) axial versetzt zueinander angeordnet sind, wobei ein die Federanbindung an den Überrollkörper (6) bildender Mitnehmer (46B'') einer zweiten bei einer Ausfahrbewegung des Überrollkörpers (6) in Wirkeingriff mit diesem gelangenden Zugfeder (52B'') in Ruheposition von dem Überrollkörper (6) weg ausgelenkt angeordnet ist und vorzugsweise an einer dem Überrollkörper (6) zugewandten Seite mit wenigstens einer Rolle (57A'') ausgebildet ist, an der der Überrollkörper (6) bis zum Wirkeingriff der zweiten Zugfeder (52B'') abrollbar ist.

7. Überrollschutzsystem nach einem der Ansprüche 1 bis 5,
**dadurch gekennzeichnet,**
**dass** die Zugfedervorrichtung (52, 52', 52''') im Ruhezustand der Überrollschutz-Vorrichtung (2, 3) wenigstens teilweise in einem axialen Aufnahmekanal (8) des Überrollkörpers (6) auf Zug vorgespannt angeordnet ist.

8. Überrollschutzsystem nach Anspruch 1,
**dadurch gekennzeichnet,**
**dass** die Federaufhängung (55, 55') an einer sich vertikal von einem Fahrzeugboden (7) weg erstreckenden Federführungsstange (53, 53') ausgebildet ist, wobei sich die Zugfedervorrichtung (52, 52') in Richtung eines Fahrzeugbodens (7) um die Federführungsstange (53, 53') bis zu einem mit dem Überrollkörper (6) wirkverbundenen Federteller (56, 56') erstreckt.

9. Überrollschutzsystem nach Anspruch 1,
**dadurch gekennzeichnet,**
**dass** die Federaufhängung (45) an wenigstens einer sich vertikal von einem Fahrzeugboden (7) weg in das Innere des Überrollkörpers (6) erstreckenden Strebe (12, 14) angeordnet ist, wobei sich die Zugfedervorrichtung (52) frei in Richtung des Fahrzeugbodens (7) bis zu einer mit dem Überrollkörper (6) wirkverbundenen Federanbindung (46) erstreckt.

10. Überrollschutzsystem nach Anspruch 9,
**dadurch gekennzeichnet,**
**dass** die Federanbindung als ein Mitnehmer (46) mit einer einen unteren Rand des Überrollkörpers (6) untergreifenden Lasche (47) ausgebildet ist.

11. Überrollschutzsystem nach Anspruch 10,
**dadurch gekennzeichnet,**
**dass** der Mitnehmer (46) auf einem an zwei gegenüber liegenden Seiten des Überrollkörpers (6) gelagerten Bolzen (34) angeordnet ist.

12. Überrollschutzsystem nach Anspruch 1,
**dadurch gekennzeichnet,**
**dass** die Federaufhängung als ein sich im Wesentlichen horizontal in den Überrollkörper (6) erstreckendes Halteelement (65) ausgebildet ist, wobei sich die Zugfedervorrichtung (52) in dem Überrollkörper (6) in Richtung des Fahrzeugbodens (7) bis zu einer mit dem Überrollkörper (6) wirkverbundenen Federanbindung (66) erstreckt und der Überrollkörper (6) zur Längsverschiebbarkeit entlang dem Halteelement (65) einen sich in Axialrichtung erstreckenden Durchtrittsschlitz (68) aufweist.

13. Überrollschutzsystem nach einem der Ansprüche 1 bis 12,
**dadurch gekennzeichnet,**
**dass** die Überrollschutz-Vorrichtung (2, 3) im Bereich einer eine vordere Wandung (20) und eine hintere Wandung (22) aufweisenden Fahrzeugquerwand (10) angeordnet ist und mit einem kassettenartigen ersten Modul (4) ausgeführt ist, wobei die vordere Wandung (20) und/oder die hintere Wandung (22) der Fahrzeugquerwand (10) jeweils eine Wandung des kassettenartigen ersten Moduls (4) bildet.

14. Überrollschutzsystem nach Anspruch 13,
**dadurch gekennzeichnet,**
**dass** die Fahrzeugquerwand (10) zwischen einer oberen Begrenzung der vorderen Wandung (20) und der hinteren Wandung (22) eine erste Führungseinrichtung (25) für das zweite Modul (5), vorzugsweise eine Austrittsöffnung (25) im Bereich einer im Wesentlichen horizontalen oberen Begrenzungswandung (24) der Fahrzeugquerwand (10), aufweist.

15. Überrollschutzsystem nach Anspruch 13 oder 14,
**dadurch gekennzeichnet,**
**dass** die Fahrzeugquerwand (10) in einem mittleren Höhenbereich eine zweite Führungseinrichtung (30) für das zweite Modul (5) aufweist, welche vorzugsweise einen Anschlag für das zweite Modul (5) bei einer Ausfahrbewegung bildet.

16. Überrollschutzsystem nach einem der Ansprüche 1 bis 15,
**dadurch gekennzeichnet,**
**dass** die lösbare Halteeinrichtung (210) ein um eine feste Drehachse (212) schwenkbar gelagertes verriegelungselement (214), welches einen Klinkenabschnitt (216) zur Wirkverbindung mit einem an dem Überrollkörper (6) angeordneten Verriegelungselement-Gegenkörper (218) in Ruheposition des Überrollkörpers (6) aufweist, umfasst, wobei das Verriegelungselement (214) in Ruheposition durch ein mit einem Aktuator (224) zusammenwirkendes Sperrglied (222) gegen eine die Halteeinrichtung (210) lösende Rotation gesichert ist.

17. Überrollschutzsystem nach einem der Ansprüche 1 bis 16,
**dadurch gekennzeichnet,**
**dass** die Verriegelungsvorrichtung (500) eine erste Rasteinrichtung (505) aufweist, die zum Abstützen des zweiten Moduls (5) mit einer zweiten Rasteinrichtung (506) in Wirkverbindung bringbar ist, eine Bewegung des zweiten Moduls (5) ausgehend von seiner Ruhelage in Richtung seiner Stützlage zulässt und eine in Richtung seiner Wirkposition angefederte, an dem ersten Modul (4) oder dem zweiten Modul (5) drehbar gelagerte Sperrklinke (509) mit wenigstens einer Rastklaue (510) aufweist, die mit einem Rastelement (507) der an dem jeweils anderen Modul (5, 4) angeordneten zweiten Rasteinrichtung (506) zusammenwirkt.

18. Überrollschutzsystem nach einem der Ansprüche 1 bis 17,
**dadurch gekennzeichnet,**
**dass** zwischen den Überrollschutz-Vorrichtungen (2, 3) zweier Fahrzeugsitze (26, 28) eine Durchladeöffnung (60) angeordnet ist, wobei die Überrollschutz-Vorrichtungen (2, 3) zweier Fahrzeugsitze (26, 28) einer Sitzreihe vorzugsweise jeweils in entgegengesetzter Richtung im Wesentlichen außermittig zu dem zugeordneten Fahrzeugsitz (26, 28) angeordnet sind.

## Claims

1. A rollover protection system for a motor vehicle, said system consisting of at least one rollover protection device (2, 3) for at least one vehicle seat (26, 28) and comprising
- a first module (4), fixed to the vehicle body, with guide devices (25, 30, 35) for a second module (5), said second module (5) being movable in said guide devices (25, 30, 35) between a lowered rest position and an elevated support position, and comprising a rollover element (6);
- a releasable holding device (210) for holding the second module (5) in its rest position;
- a locking device (500, 600) by means of which the second module (5) can be automatically supported in a position deviating from its rest position against a force acting in the direction of the rest position, and
- a drive system (50) with a tension spring device (52, 52', 52", 52''') by means of which the second module (5) is pre-stressed in its rest position and can be shifted in the direction of its support position, if required,
**characterized in that**
the tension spring device (52, 52', 52", 52''') has its upper end connected to a spring suspension (45, 55, 65) fixed to the vehicle, or is supported on an upper end of a compression spring (51) resting on the vehicle, and has its lower end operatively connected directly to the rollover element (6) of the extendable second module (5) as well as being arranged in the extension direction of the rollover element (6).

2. Rollover protection system according to claim 1,
**characterized in that**
the tension spring device is provided as a single tension spring (52, 52''').

3. Rollover protection system according to claim 1,
**characterized in that**
the tension spring device (52', 52") comprises at least two tension springs (52A', 52B'; 52A", 52B'').

4. Rollover protection system according to claim 3,
**characterized in that**
the tension springs (52A', 52B'; 52A", 52B'') are arranged to have a staggered effect.

5. Rollover protection system according to claim 4,
**characterized in that**
the tension springs (52A', 52B') are nested within each other, with an inner tension spring (52A') having a higher spring stiffness than an outer tension spring (52B').

6. Rollover protection system according to claim 4 or 5,
**characterized in that**
the tension springs (52A", 52B'') are arranged with a mutual axial offset around the rollover element (6), with a follower (46B'') of a second tension spring (52B'') forming the spring connection to the rollover element (6), when the follower (46B'') is in operative engagement with the rollover element (6) during an extension movement of the rollover element (6), said follower (46B'') being deflected away from the rollover element (6) in the rest position and preferably being provided, on a side facing the rollover element (6), with at least one roll (57A") over which the rollover element (6) can be rolled until it is in operative engagement with the second tension spring (52B'').

7. Rollover protection system according to any one of claims 1 to 5,
**characterized in that**,
in the resting state of the rollover protection device (2, 3), the tension spring device (52, 52', 52", 52''') is arranged to be at least partly prestressed under tension in an axial receiving channel (8) of the rollover element (6).

8. Rollover protection system according to claim 1,
**characterized in that**
the spring suspension (55, 55') is provided on a spring guide rod (53, 53') that extends vertically away from a vehicle bottom (7), and the tension spring device (52, 52') extends around the spring guide rod (53, 53') in the direction of a vehicle bottom (7), up to a spring plate (56, 56') that is operatively connected to the rollover element (6).

9. Rollover protection system according to claim 1,
**characterized in that**
the spring suspension (45) is arranged on at least one traverse (12, 14) that extends vertically away from a vehicle bottom (7) and into the interior of the rollover element (6) and the tension spring device (52) extends freely in the direction of the vehicle bottom (7), up to a spring connection (46) that is operatively connected to the rollover element (6).

10. Rollover protection system according to claim 9,
**characterized in that**
the spring connection is provided as a follower (46) with a lug (47) that engages beneath a lower edge of the rollover element (6).

11. Rollover protection system according to claim 10,
**characterized in that**
the follower (46) is arranged on a pin (34) that is supported on two opposite sides of the rollover element (6).

12. Rollover protection system according to claim 1,
**characterized in that**
the spring suspension is provided as a holding element (65) that extends substantially horizontally into the rollover element (6), with the tension spring device (52) extending in the rollover element (6) in the direction of the vehicle bottom (7), up to a spring connection (66) that is operatively connected to the rollover element (6), and the rollover element (6) comprising an axially extending passage slot (68) for longitudinal displacement along the holding element (65).

13. Rollover protection system according to any one of claims 1 to 12,
**characterized in that**
the rollover protection device (2, 3) is arranged in the region of a transverse vehicle wall (10), comprising a front wall (20) and a rear wall (22), and is provided with a cassette-like first module (4), said front wall (20) and/or said rear wall (22) of the transverse vehicle wall (10) each forming a wall of the cassette-like first module (4).

14. Rollover protection system according to claim 13,
**characterized in that**
the transverse vehicle wall (10) comprises, between an upper boundary of the front wall (20) and the rear wall (22), a first guide device (25) for the second module (5), preferably an exit opening (25) in the region of a substantially horizontal upper partition wall (24) of the transverse vehicle wall (10).

15. Rollover protection system according to claim 13 or 14,
**characterized in that**
the transverse vehicle wall (10) comprises, in a mid-height region, a second guide device (30) for the second module (5), which second guide device (30) preferably forms a stop for the second module (5) during an extending movement.

16. Rollover protection system according to any one of claims 1 to 15,
**characterized in that**
the releasable holding device (210) comprises a locking element (214) mounted to pivot around a fixed axis of rotation (212), said locking element (214) having a detent section (216) designed to cooperate with a locking element counterpart (218) arranged on the rollover element (6) in the rest position of the rollover element (6), the locking element (214) being secured in the rest position by a blocking element (222), which cooperates with an actuator (224), against a rotation that releases the holding device (210)

17. Rollover protection system according to any one of claims 1 to 16,
**characterized in that**
the locking device (500) has a first latching device (505), which can be operatively connected to a second latching device (506) to support the second module (5), permits movement of the second module (5) from its rest position in the direction of its support position, and comprises a detent (509) that is springloaded in the direction of its operative position, is rotatably mounted on the first module (4) or the second module (5) and comprises at least one latching claw (510) that cooperates with a latching element (507) of the second latching device (506) arranged on the respective other module (5, 4).

18. Rollover protection system according to any one of claims 1 to 17,
**characterized in that**
a passage opening (60) is disposed between the rollover protection devices (2, 3) of two vehicle seats (26, 28), and the rollover protection devices (2, 3) of two vehicle seats (26, 28) of a row of seats are each preferably arranged in opposite directions, essentially off-center with respect to the corresponding vehicle seat (26, 28).

## Revendications

1. Système de protection au retournement pour un véhicule automobile, ledit système consistant en au moins un dispositif de protection au retournement (2, 3) pour au moins un siège de véhicule (26, 28) et comprenant
- un premier module (4), monté fixe sur la carrosserie, avec des dispositifs de guidage (25, 30, 35) pour un deuxième module (5) qui est mobile dans lesdits dispositifs de guidage (25, 30, 35) entre une position de repos abaissée et une position d'appui relevée et comprend un corps de sécurité (6);
- un dispositif de maintien amovible (210) pour maintenir le deuxième module (5) dans sa position de repos;
- un dispositif de blocage (500, 600) au moyen duquel le deuxième module (5) peut être automatiquement supporté dans une position différente de sa position de repos, à l'encontre d'un effort agissant en direction de la position de repos, et
- un système d'entraînement (50) comprenant un dispositif à ressort de traction (52, 52', 52", 52"') au moyen duquel le deuxième module (5) est précontraint dans sa position de repos et peut être amené en direction de sa position d'appui en cas de besoin,
**caractérisé en ce que**
ledit dispositif à ressort de traction (52, 52', 52", 52''') est relié, par son extrémité supérieure, à une suspension pour ressort (45, 55, 65) montée fixe sur le véhicule, ou prend appui sur une extrémité supérieure d'un ressort de compression (51) supporté de manière fixe sur le véhicule, et l'extrémité inférieure dudit dispositif à ressort de traction (52, 52', 52", 52''') est directement reliée de manière opérative au corps de sécurité (6) du deuxième module (5) déployable et est disposée dans la direction de déploiement du corps de sécurité (6).

2. Système de protection au retournement selon la revendication 1,
**caractérisé en ce que**
le dispositif à ressort de traction se présente sous la forme d'un seul ressort de traction (52, 52''').

3. Système de protection au retournement selon la revendication 1,
**caractérisé en ce que**
le dispositif à ressort de traction (52', 52") comprend au moins deux ressorts de traction (52A', 52B'; 52A", 52B'').

4. Système de protection au retournement selon la revendication 3,
**caractérisé en ce que**
les ressorts de traction (52A', 52B'; 52A", 52B'') sont disposés de manière à avoir un effet d'échelon.

5. Système de protection au retournement selon la revendication 4,
**caractérisé en ce que**
les ressorts de traction (52A', 52B') sont imbriqués les uns dans les autres, et un ressort de traction (52A') intérieur présente une rigidité de ressort plus élevée qu'un ressort de traction (52B') extérieur.

6. Système de protection au retournement selon la revendication 4 ou 5,
**caractérisé en ce que**
les ressorts de traction (52A", 52B'') sont disposés avec un décalement mutuel en direction axiale autour du corps de sécurité (6), et un entraîneur (46B''), qui constitut le rattachement de ressort au corps de sécurité (6) et qui est l'entraîneur (46B'' d'un deuxième ressort de traction (52B'') venant en engagement actif avec le corps de sécurité (6) pendant un mouvement de déploiement de celui-ci, est défléchi partant du corps de sécurité (6), dans la position de repos, l'entraîneur (46B'') présentant de préférence, d'un côté tourné vers le corps de sécurité (6), au moins un rouleau (57A") sur lequel le corps de sécurité (6) peut être roulé jusqu'à l'engagement actif du deuxieme ressort de traction (52B'').

7. Système de protection au retournement selon l'une quelconque des revendications 1 à 5,
**caractérisé en ce que**,
dans l'état de repos du dispositif de protection au retournement (2, 3), le dispositif à ressort de traction (52, 52', 52", 52"') est disposé de manière à être au moins partiellement soumis à une précontrainte de traction dans un canal axial de logement (8) du corps de sécurité (6).

8. Système de protection au retournement selon la revendication 1,
**caractérisé en ce que**
la suspension pour ressort (55, 55') est disposée sur une barre de guidage de ressort (53, 53') qui s'étend dans une direction verticale à partir d'un fond du véhicule (7), et le dispositif à ressort de traction (52, 52') s'étend autour de la barre de guidage de ressort (53, 53'), en direction d'un fond du véhicule (7), jusqu'à une plaque de ressort (56, 56') qui est reliée de manière opérative avec le corps de sécurité (6).

9. Système de protection au retournement selon la revendication 1,
**caractérisé en ce que**
la suspension pour ressort (45) est disposée sur au moins une traverse (12, 14) qui s'étend dans une direction verticale à partir d'un fond du véhicule (7), vers l'intérieur du corps de sécurité (6), et le dispositif à ressort de traction (52) s'étend librement en direction du fond du véhicule (7), jusqu'à un rattachement de ressort (46) qui est relié de manière opérative avec le corps de sécurité (6).

10. Système de protection au retournement selon la revendication 9,
**caractérisé en ce que**
le rattachement de ressort se présente dans la forme d'un entraîneur (46) comprenant une languette (47) qui vient en prise au-dessous d'un bord inférieur du corps de sécurité (6).

11. Système de protection au retournement selon la revendication 10,
**caractérisé en ce que**
l'entraîneur (46) est disposé sur un boulon (34) qui est supporté sur deux côtés opposés du corps de sécurité (6).

12. Système de protection au retournement selon la revendication 1,
**caractérisé en ce que**
la suspension pour ressort se présente sous la forme d'un élément de maintien (65) qui s'étend vers l'intérieur du corps de sécurité (6) dans une direction sensiblement horizontale, le dispositif à ressort de traction (52) s'étendant à l'intérieur du corps de sécurité (6) en direction du fond du véhicule (7), jusqu'à un rattachement de ressort (66) qui est relié de manière opérative avec le corps de sécurité (6), et le corps de sécurité (6) comprenant une fente de passage (68), qui s'étend dans une direction axiale, de sorte que le corps de sécurité (6) soit déplaçable dans une direction longitudinale sur l'élément de maintien (65).

13. Système de protection au retournement selon l'une quelconque des revendications 1 à 12,
**caractérisé en ce que**
le dispositif de protection au retournement (2, 3) est disposé dans la région d'une paroi transversale du véhicule (10), qui comprend une paroi avant (20) et une paroi arrière (22), et qu'il présente un premier module (4) en forme de caisse, ladite paroi avant (20) et/ou ladite paroi arrière (22) de la paroi transversale du véhicule (10) constituant respectivement une paroi du premier module (4) en forme de caisse.

14. Système de protection au retournement selon la revendication 13,
**caractérisé en ce que**
la paroi transversale du véhicule (10) comprend, entre une limite supérieure de la paroi avant (20) et la paroi arrière (22), un premier dispositif de guidage (25) pour le deuxième module (5), de préférence une ouverture de sortie (25) dans la région d'une paroi limite supérieure (24) sensiblement horizontale de la paroi transversale du véhicule (10).

15. Système de protection au retournement selon la revendication 13 ou 14,
**caractérisé en ce que**
la paroi transversale du véhicule (10) comprend, dans une région à demi-hauteur, un deuxième dispositif de guidage (30) pour le deuxième module (5), ce deuxième dispositif de guidage (30) constituant de préférence une butée pour le deuxième module (5) pendant un mouvement de déploiement.

16. Système de protection au retournement selon l'une quelconque des revendications 1 à 15,
**caractérisé en ce que**
le dispositif de maintien amovible (210) comprend un élément de verrouillage (214) monté pivotant autour d'un axe fixe de rotation (212), ledit élément de verrouillage (214) présentant une partie en forme de cliquet (216) destinée à coopérer avec un contre-élément de verrouillage (218), qui est disposé sur le corps de sécurité (6), dans la position de repos du corps de sécurité (6), l'élément de verrouillage (214) étant protégé en position de repos, par un élément d'arrêt (222) qui coopère avec un actionneur (224), contre une rotation libérant le dispositif de maintien (210).

17. Système de protection au retournement selon l'une quelconque des revendications 1 à 16,
**caractérisé en ce que**
le dispositif de blocage (500) présente un premier dispositif d'encliquetage (505), qui peut coopérer avec un deuxième dispositif d'encliquetage (506) afin de supporter le deuxième module (5), permet un mouvement du deuxième module (5) à partir de sa position de repos vers sa position d'appui, et comprend un cliquet d'arrêt (509) qui est soumis à une force élastique en direction de sa position opérative, est monté rotatif sur le premier module (4) ou le deuxième module (5) et comprend au moins une patte d'encliquetage (510) coopérant avec un élément d'encliquetage (507) du deuxième dispositif d'encliquetage (506) disposé sur l'autre module (5, 4) respectif.

18. Système de protection au retournement selon l'une quelconque des revendications 1 à 17,
**caractérisé en ce qu'**une ouverture de passage (60) est menagée entre les dispositifs de protection au retournement (2, 3) de deux sièges de véhicule (26, 28), les dispositifs de protection au retournement (2, 3) de deux sièges de véhicule (26, 28) d'une rangée de sièges étant de préférence disposés à chaque fois en direction opposée sensiblement décentrés par rapport au siège de véhicule (26, 28) concerné.
